# EUROPEAN PATENT SPECIFICATION

(11) **EP 2 477 455 B1**
(45) Date of publication and mention of the grant of the patent: **04.03.2020**
(21) Application number: 10813522.9
(22) Date of filing: 03.09.2010
(51) Int. Cl.: H05B 6/72, H05B 6/70

(54) **MICROWAVE HEATING DEVICE**
MIKROWELLENHEIZVORRICHTUNG
DISPOSITIF CHAUFFANT HYPERFRÉQUENCES

(30) Priority: 07.09.2009 JP 2009205481
(43) Date of publication of application: 18.07.2012
(73) Proprietor: Panasonic Corporation, Kadoma-shi Osaka 571-8501 (JP)
(72) Inventor: NOBUE, Tomotaka, Osaka 540-6207 (JP); OOMORI, Yoshiharu, Osaka 540-6207 (JP); YASUI, Kenji, Osaka 540-6207 (JP); MIHARA, Makoto, Osaka 540-6207 (JP)
(74) Representative: SSM Sandmair
(86) International application number: PCT/JP2010/005431
(87) International publication number: WO 2011/027571

(56) References cited:
- EP-A1- 2 326 142
- WO-A1-03/077299
- WO-A1-2009/050893
- JP-A- 8 337 887
- JP-A- S60 193 292
- JP-A- 2000 357 583
- JP-A- 2009 170 335
- JP-A- 2009 187 856
- JP-A- 2009 230 881
- US-A- 5 558 800
- US-A1- 2005 162 335
- US-B1- 7 435 931

## Description

### Technical Field

The present invention relates to microwave heating devices including plural radiation portions for radiating microwaves generated from microwave generating means.

### Background Art

Conventional microwave heating devices of this type have been structured to include a heating chamber having a rectangular parallelepiped shape, in general, wherein the heating chamber includes one or more radiation portions. Such plural radiation portions have been structured such that the radiation portions are provided on an upper wall surface and a bottom wall surface of the heating chamber and, also, the respective radiation portions are supplied with microwaves from dedicated microwave generating means. In other cases, such plural radiation portions have been structured such that two radiation portions are provided on side wall surfaces of the heating chamber and, also, the two radiation portions are supplied with microwaves from a single microwave generating means through a waveguide (refer to Patent Literature 1, for example).

A microwave heating device according to the preamble of claim 1 is disclosed in JP 2009 170335 A.

Further, in some structures, plural radiation portions are dispersively placed on wall surfaces of a heating chamber, and microwave generating means are provided for supplying microwaves to the respective radiation portions, wherein, out of these microwave generating means, the microwave generating means placed on at least two wall surfaces are operated in a time-division manner (refer to Patent Literature 2, for example).

As described above, with the microwave heating device disclosed in Patent Literature 2, the selected microwave generating means are operated in a time-division manner, in order to prevent the microwave generating means connected to the radiation portions from being broken by microwaves received by these radiation portions due to interference of microwaves within the space in the heating chamber, which enables operating the plural microwave generating means substantially at the same time.

Further, by properly selecting connections between the heating chamber and the microwave generating means, for the radiation portions placed on the wall surfaces orthogonal to each other in the heating chamber, it is possible to suppress interference of microwaves radiated from both the radiation portions, thereby enabling oscillating the microwave generating means at the same time.

Some conventional microwave heating devices have been structured to include plural radiation portions and have been adapted to change the amounts of microwave electric power supplied to the respective radiation portions, through control of a phase shifter provided in microwave generating means (refer to Patent Literature 3, for example). In such a conventional microwave heating device, the microwave generating means includes an oscillation portion constituted by a semiconductor, a dividing portion for dividing the output of the oscillation portion into plural parts, plural amplification portions for amplifying the respective outputs resulted from the division, a synthesis portion for synthesizing the outputs from the amplification portions, and a phase shifter provided between the dividing portion and the amplification portions. In such conventional microwave heating devices, the respective radiation portions for radiating microwaves within the heating chamber are connected to two outputs of the synthesis portion.

The phase shifter is structured to change over the microwave path line length by utilizing ON/OFF characteristics of diodes. Further, the synthesis portion is constituted by a 90-degree hybrid coupler or 180-degree hybrid coupler. By controlling the phase shifter, the electric power ratio between the two outputs from the synthesis portion is changed, or the phases of the two outputs are changed to be the same phase or opposite phases.

Further, some conventional microwave heating devices have been structured to radiate circularly polarized waves from radiation portions, in order to facilitate uniformization of heating of objects to be heated within a heating chamber (refer to Patent Literature 4, for example). Patent Literature 4 discloses a microwave heating device including a heating chamber which is provided, in a wall surface thereof, with a pair of opening portions orthogonal to each other, in order to enable radiations of circularly polarized waves.

### Citation List

### Patent Literatures

Patent Literature 1: Japanese Unexamined Patent Publication No. 04-233188
Patent Literature 2: Japanese Unexamined Patent Publication No. 53-5445
Patent Literature 3: Japanese Unexamined Patent Publication No. 56-132793
Patent Literature 4: Japanese Unexamined Patent Publication No. 2002-061847

### Summary of Invention

### Technical Problem

The aforementioned conventional microwave heating devices have been structured to include one or more radiation portions placed therein, wherein the radiation portions are specialized for a radiating function.

Further, the aforementioned conventional microwave heating devices have been structured to radiate microwaves, such that the radiated microwaves are polarized into linearly polarized waves or circularly polarized waves.

The present invention was made in order to overcome problems in the aforementioned conventional microwave heating devices and aims at providing a microwave heating device including radiation portions for radiating microwaves, having a function of radiating microwaves forming both linearly polarized waves and circularly polarized waves from the radiation portions and, further, additionally having a function of synthesizing electric power, thereby offering new radiation functions.

### Solution to Problem

The present invention is a microwave heating device according to claim 1. With the microwave heating device of the present invention, it is possible to radiate microwaves supplied to the respective microwave feeding points to the inside of the heating chamber, in such a way as to synthesize the electric power of these microwaves. Further, it is possible to supply larger electric power to the inside of the heating chamber, without increasing the number of radiation portions, using the microwave generating portion capable of outputting relatively-smaller amounts of electric power.

In an embodiment of the invention, microwaves radiated from the at least two radiation portions are variable in phase difference therebetween. With the microwave heating device having the aforementioned structure, it is possible to change the positions at which the microwaves radiated from the respective radiation portions come into collision with each other, in the space within the heating chamber, which enables dispersing the distribution of microwaves within the heating chamber, thereby further facilitating uniformization of heating of the to-be-heated object.

In an embodiment of the invention, microwaves fed to the respective microwave feeding points are made to have a phase difference of 90 degrees, therebetween, at a center frequency within a used microwave frequency range. With the microwave heating device having the aforementioned structure, it is possible to synthesize, in electric power, the microwaves supplied to the microwave feeding points and, further, it is possible to radiate circularly polarized waves from the radiation portions. Further, it is possible to disperse microwaves over the entire heating chamber, thereby enabling effectively heating the to-be-heated object.

In an embodiment of the invention, at a center frequency within a used microwave frequency range, with respect to the phase of microwaves fed to one of the microwave feeding points, which is defined as a reference, the phase of microwaves fed to the other microwave feeding point is changed over between 90 degrees and -90 degrees. With the microwave heating device having the aforementioned structure, it is possible to select, through changeovers, the direction of circling, in radiating circularly polarized waves. Further, it is possible to change the direction of circling, according to the type and the volume of the to-be-heated object and the state of progress of heating, thereby facilitating uniformization of heating of the to-be-heated object.

In an embodiment of the invention, there is provided a changeover portion adapted to be controlled for stopping feeding of microwaves to at least one microwave feeding point, out of the first microwave feeding point and the second microwave feeding point in each of the radiation portions. With the microwave heating device having the aforementioned structure, it is possible to perform control for changing over between radiations of circularly polarized waves and radiations of vertically polarized waves from a single radiation portion, thereby enabling heating the to-be-heated object in desired states.

In an embodiment of the invention, the plural radiation portions are placed in the heating chamber, such that directions of excitations of the respective radiation portions are coincident with a widthwise direction and a depthwise direction of the heating chamber, and microwaves fed to the respective plural microwave feeding points in each of the radiation portions are varied, in level, according to the ratio between a widthwise size and a depthwise size of the heating chamber. With the microwave heating device having the aforementioned structure, it is possible to facilitate dispersion of microwaves within the heating chamber according to the shape of the heating chamber. For example, in cases where the heating chamber has a larger width, by supplying larger microwave electric power to the microwave feeding points associated with the excitations in the widthwise direction, it is possible to radiate circularly polarized waves having an elliptical circling shape with a larger size in the widthwise direction of the heating chamber, thereby facilitating dispersion of radio waves within the heating chamber.

### Advantageous Effects of Invention

With the present invention, it is possible to provide a microwave heating device having a function of radiating, from the radiation portions, microwaves forming both linearly polarized waves and circularly polarized waves, as aspects of radiations from the radiation portions, and, further, additionally having a function of synthesizing electric power, thereby offering new functions to the radiation portions.

### Brief Description of Drawings

Fig. 1 is a perspective view illustrating the inside of a heating chamber in a microwave oven as a microwave heating device according to a first embodiment of the present invention.
Fig. 2 is a block diagram illustrating the structure of the microwave heating device according to the first embodiment.
Fig. 3 is a plan view illustrating radiation portions which are placed on a bottom wall surface in the microwave heating device according to the first embodiment.
Fig. 4 is a view illustrating a first aspect of radiations from the radiation portions in the microwave heating device according to the first embodiment.
Fig. 5 is a view illustrating a second aspect of radiations from the radiation portions in the microwave heating device according to the first embodiment of the present invention.
Fig. 6 is a view illustrating a third aspect of radiations from the radiation portions in the microwave heating device according to the first embodiment of the present invention.
Fig. 7 is a perspective view illustrating the inside of a heating chamber in a microwave oven as a microwave heating device according to a second embodiment of the present invention.
Fig. 8 is a block diagram illustrating the structure of the microwave heating device according to the second embodiment.
Fig. 9 is a plan view illustrating radiation portions which are placed on a bottom wall surface in the microwave heating device according to the second embodiment.
Fig. 10 is a view illustrating a fourth aspect of radiations from the radiation portions in the microwave heating device according to the second embodiment.

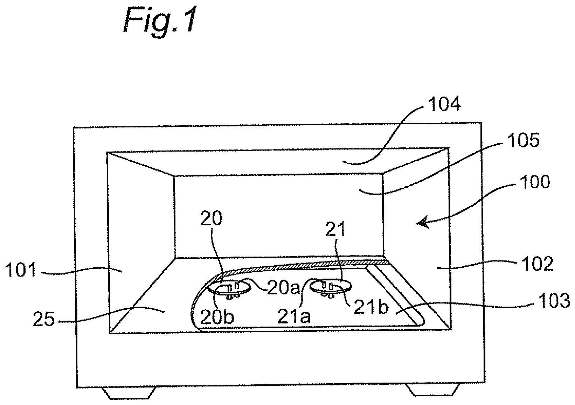

Fig. 1 1 is a view illustrating a fifth aspect of radiations from the radiation portions in the microwave heating device according to the second embodiment.

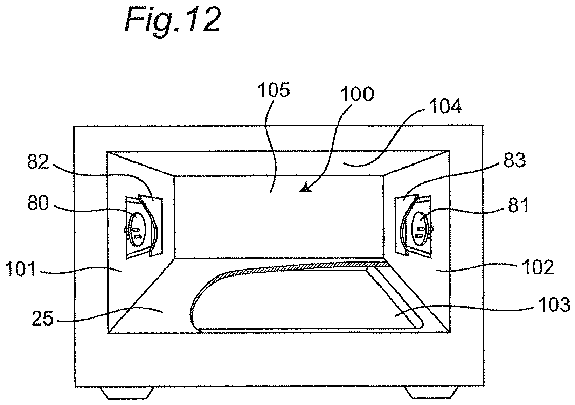

Fig. 12 is a perspective view illustrating the inside of a heating chamber in a microwave oven as a microwave heating device according to a third embodiment which is not an embodiment of the invention but which is an example useful for understanding the present invention.

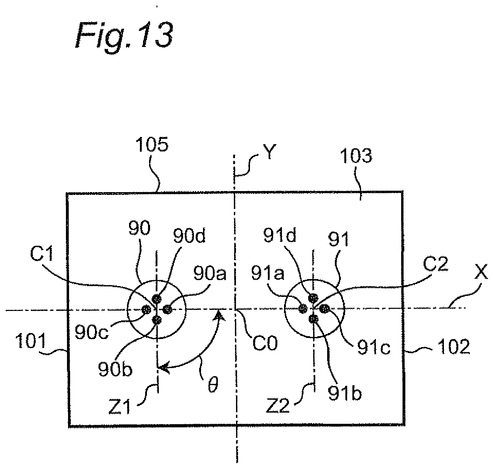

Fig. 13 is a plan view illustrating radiation portions which are placed on a bottom wall surface in a microwave heating device according to a fourth embodiment. The fourth embodiment is an embodiment of the present invention.

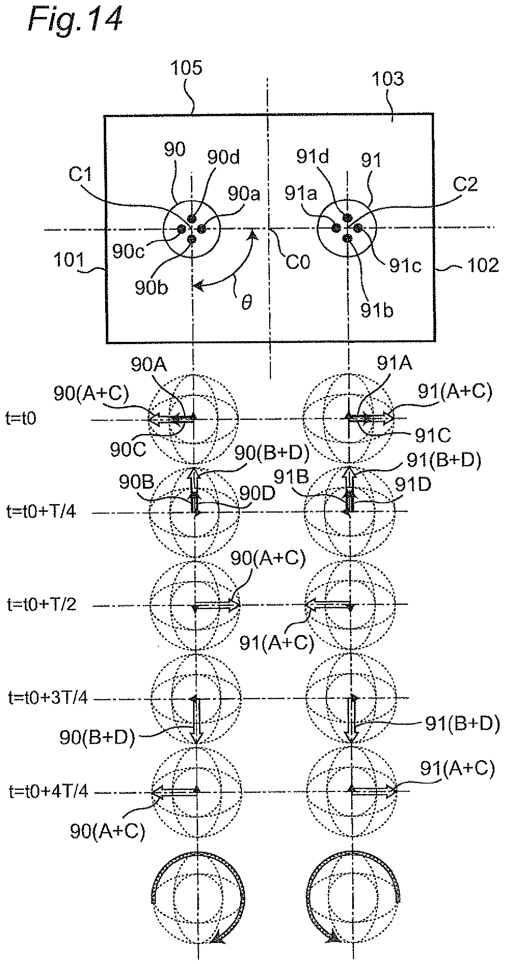

Fig. 14 is a view illustrating a sixth aspect of radiations from the radiation portions in the microwave heating device according to the fourth embodiment.

### Description of Embodiments

Hereinafter, with reference to the accompanying drawings, there will be described microwave ovens, as embodiments of a microwave heating device according to the present invention. Further, the microwave heating device according to the present invention is not limited to the structures of the microwave ovens which will be described in the following embodiments and is intended to include microwave heating devices structured based on technical concepts equivalent to the technical concepts which will be described in the following embodiments and based on technical common senses in the present technical field.

### (First Embodiment)

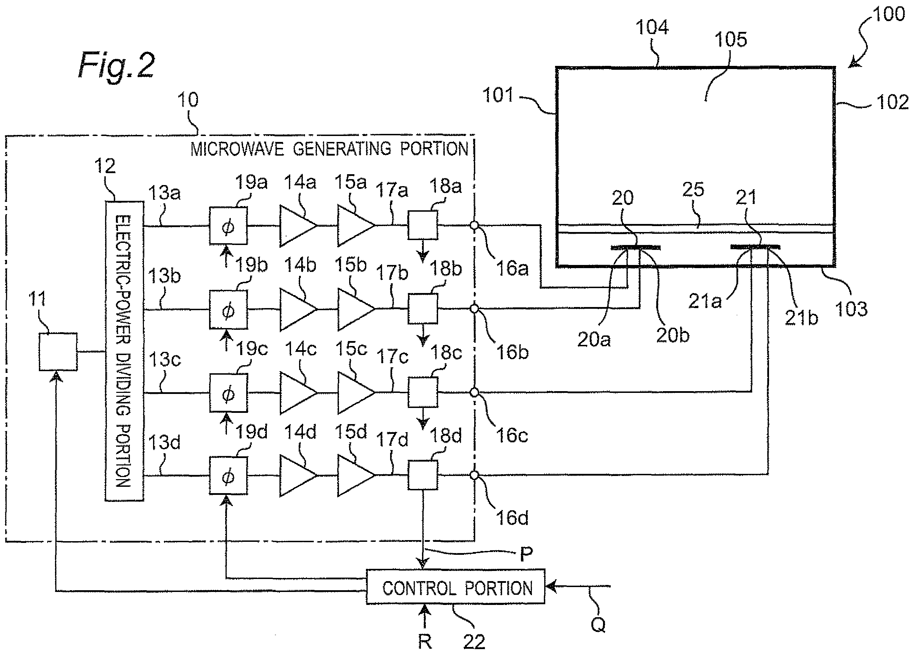

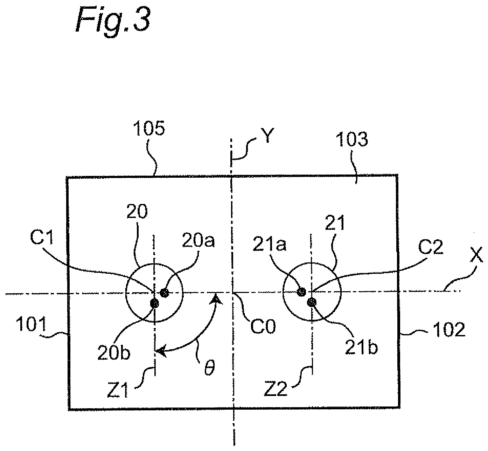

Fig. 1 is a perspective view illustrating the inside of a heating chamber 100 in a microwave oven as a microwave heating device according to a first embodiment of the present invention. In Fig. 1, the inside of the heating chamber 100 is partially cutout, and an openable door for opening and closing the heating chamber 100 is not illustrated. Fig. 2 is a block diagram illustrating the structure of the microwave heating device according to the first embodiment. Fig. 3 is a plan view illustrating radiation portions 20 and 21 which are placed on a bottom wall surface in the microwave heating device according to the first embodiment.

As illustrated in Fig. 1, the microwave heating device according to the first embodiment of the present invention includes the heating chamber 100 having a substantially-rectangular parallelepiped structure for housing an object to be heated and, further, is structured to perform heating processing on the to-be-heated object housed within the heating chamber 100 with microwaves from the plural radiation portions 20 and 21. The heating chamber 100 is constituted by a left wall surface 101, a right wall surface 102, a bottom wall surface 103, an upper wall surface 104 and a back wall surface 105 which are made of a metal material and, further, is constituted by the openable door (not illustrated) adapted to be opened and closed for housing the to-be-heated object therein. The heating chamber 100 is structured to enclose, inside the heating chamber 100, the microwaves radiated from the radiation portions 20 and 21 provided on the bottom wall surface 103, in a state where the openable door is closed.

As illustrated in Fig. 2, a microwave generating portion 10 as microwave generating means is constituted by an oscillation portion 11, an electric-power dividing portion 12 for dividing the output of the oscillation portion 11 into four parts, initial-stage amplification portions 14a, 14b, 14c and 14d (which will be referred to as 14a to 14d, and other plural components will be similarly abbreviated, in the following description) which are supplied with the respective outputs from the electric-power dividing portion 12 through microwave transmission paths 13a to 13d, main amplification portions 15a to 15d for further amplifying the respective outputs of the initial-stage amplification portions 14a to 14d, electric-power detecting portions 18a to 18d inserted in respective microwave transmission paths 17a to 17d for directing the outputs of the main amplification portions 15a to 15d to respective output portions 16a to 16d, and phase variable portions 19a to 19d inserted in the respective microwave transmission paths 13a to 13d between the electric-power dividing portion 12 and the initial-stage amplification portions 14a to 14d. The oscillation portion 11, the initial-stage amplification portions 14a to 14d, and the main amplification portions 15a to 15d in the microwave generating portion 10 are constituted by respective semiconductor devices.

As illustrated in Fig. 3, on the bottom wall surface 103 forming the heating chamber 100, there are placed the plural (two, in the first embodiment) radiation portions (20, 21) for radiating and supplying microwaves to the inside of the heating chamber 100. In the first embodiment, the two radiation portions (the first radiation portion 20 and the second radiation portion 21) are placed at positions symmetrical with respect to a center line in the forward and rearward direction of the device (a line represented by a reference character Y in Fig. 3), which passes through an approximate-center point (CO) of the bottom wall surface 103.

The first radiation portion 20 includes two microwave feeding points 20a and 20b, wherein the respective outputs of the microwave generating portion 10 are directed to the microwave feeding points 20a and 20b. Similarly, the second radiation portion 21 includes two microwave feeding points 21a and 21b, wherein the respective outputs of the microwave generating portion 10 are directed to the microwave feeding points 21a and 21b. The microwave feeding points 20a and 20b in the first radiation portion 20 and the microwave feeding points 21a and 21b in the second radiation portion 21 are placed at positions symmetrical with respect to the aforementioned center axis Y of the bottom wall surface 103.

The first radiation portion 20 and the second radiation portion 21 are antennas having a substantially-disk shape, and the first microwave feeding points 20a and 21a are placed on the line connecting the respective center points C1 and C2 to each other (the line represented by a reference character X in Fig. 3). The second microwave feeding points 20b and 21b are placed on the respective lines (the lines designated by reference characters Z1 and Z2 in Fig. 3) which pass through the center points C1 and C2 and also are orthogonal to the line X connecting the center points C1 and C2 to each other. The respective microwave feeding points 20a, 20b and 21a and 21b are placed such that they are spaced apart by predetermined distances from the center points C1 and C2 of the radiation portions 20 and 21, in order to attain impedance matching.

As described above, in the first radiation portion 20, the line X connecting the first microwave feeding point 20a and the center point C 1 to each other, and the line Z1 connecting the second microwave feeding point 20b and the center point C1 to each other are placed to form an intersection angle θ of 90 degrees, therebetween. Similarly, in the second radiation portion 21, the line X connecting the first microwave feeding point 21a and the center point C2 to each other, and the line Z2 connecting the second microwave feeding point 21b and the center point C2 to each other are placed to form an intersection angle θ of 90 degrees, therebetween.

In the microwave heating device according to the first embodiment, the initial-stage amplification portions 14a to 14d and the main amplification portions 15a to 15d include circuits formed from conductive patterns formed on a single surface of a dielectric substrate made of a low dielectric loss material, wherein, in order to preferably operate the semiconductor devices constituting the amplification devices in the respective amplification portions provided in the circuits, each of the semiconductor devices is provided with matching circuits at the input and output sides thereof.

The microwave transmission paths 13a to 13d and 17a to 17d are formed from transmission circuits with characteristic impedances of about 50 ohms, from conductive patterns provided on a single surface of a dielectric substrate.

The electric-power dividing portion 12 has a two-stage structure of a wilkinson type for dividing electric power into two parts. In the first embodiment, since the wilkinson-type electric-power division structure is employed, the microwaves ideally have the same phase at the output terminals of the electric-power dividing portion 12.

Between the electric-power dividing portion 12 and the initial-stage amplification portions 14a to 14d, there are provided the phase variable portions 19a to 19d. The phase variable portions 19a to 19d are reflection-type phase circuits each having a circuit structure incorporating a variable capacitance diode therein.

Regarding characteristics of the reflection-type phase circuits, the variable capacitance diodes are selected, and the applied-voltage variation range therein is set, such that phase delays of up to 180 degrees or more can be induced by varying the voltages applied to the variable capacitance diodes, with respect to transmission of a center frequency within a frequency range used in the microwave heating device.

By controlling the operations of the phase variable portions 19a to 19d having the aforementioned structure, it is possible to vary, up to 180 degrees or more, the respective outputs from the output portions 16a to 16b in the microwave generating portion 10, namely the phase delays among the microwave feeding points 20a, 20b, 21a and 2 1 b in the respective radiation portions 20 and 21.

The electric-power detection portions 18a to 18d are adapted to detect microwave electric power transmitted from the microwave generating portion 10 toward the heating chamber 100 (hereinafter, referred to as the amounts of supplied microwaves), and electric power of so-called reflected waves which are transmitted from the heating chamber 100 to the microwave generating portion 10 (hereinafter, referred to as the amounts of reflected microwaves). Further, the electric-power detection portions 18a to 18d can be also structured to detect at least the amounts of reflected microwaves. The electric-power detection portions 18a to 18d are adapted to extract amounts of electric power which are about 1/10000 the amounts of reflected microwaves and/or the amounts of supplied microwaves transmitted through the microwave transmission paths 17a, 17b, 17c and 17d, by setting the degree of electric-power coupling to about 40 dB, for example.

The electric-power signals extracted as described above are subjected to rectification by detector diodes (not illustrated) and, then, are subjected to smoothing processing by capacitors (not illustrated), and the signals having been subjected to the smoothing processing are inputted to a control portion 22.

The control portion 22 controls the oscillating frequency and the oscillating output of the oscillation portion 11, which is a constituent of the microwave generating portion 10, and further controls the voltages applied to the phase variable portions 19a and 19b, based on conditions for heating a to-be-heated object, which have been inputted by a user (an arrow Q in Fig. 2), and based on detection information from the respective electric-power detection portions 18a, 18b, 18c and 18d (an arrow P in Fig. 2), and heating information acquired from various types of sensors for detecting the state where the to-be-heated object is being heated during heating (an arrow R in Fig. 2). As a result thereof, the to-be-heated object being housed within the heating chamber 100 can be optimally heated, based on the heating conditions (Q) set by the user, the heating information (R) indicating the state where the to-be-heated object is being heated, or the detection information (P) from the electric-power detection portions 18a to 18d.

Further, in the microwave heating device according to the first embodiment, the microwave generating portion 10 is provided with cooling fins (not illustrated), for example, as heat-dissipation means for dissipating heat generated from the semiconductor devices. Further, within the heating chamber 100, there is provided a placement plate 25 for covering the radiation portions 20 and 21 provided on the bottom wall surface 103 and for placing and housing a to-be-heated object thereon, wherein the placement plate 25 is made of a low dielectric loss material.

### [Aspects of Radiations]

Next, there will be described the radiation portions 20 and 21 in the microwave heating device having the aforementioned structure according to the first embodiment, in terms of aspects of radiations and operations thereof.

### [Description of First Aspect of Radiations]

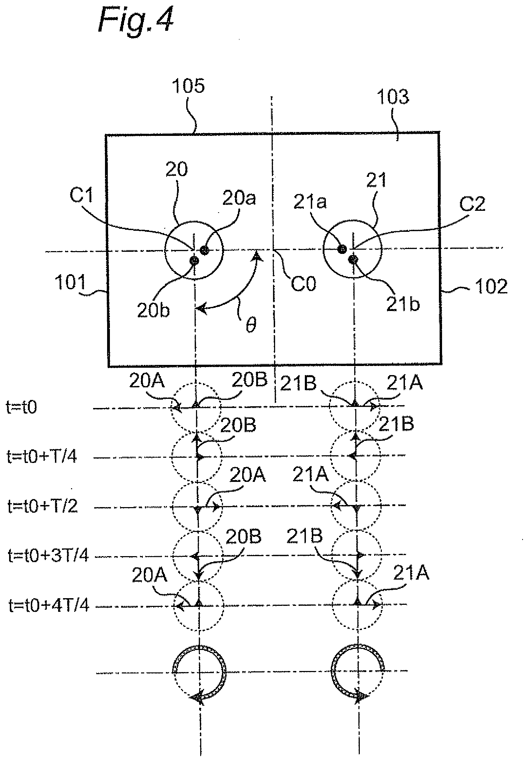

Fig. 4 is a view illustrating an aspect of radiations from the radiation portions 20 and 21 in the microwave heating device according to the first embodiment, illustrating a first aspect of radiations.

In the first aspect of radiations illustrated in Fig. 4, the second microwave feeding point 20b is fed with electricity at a feeding phase delayed by 90 degrees from the feeding phase for the first microwave feeding point 20a in the first radiation portion 20. Similarly, the second microwave feeding point 21b is fed with electricity at a feeding phase delayed by 90 degrees from the feeding phase for the first microwave feeding point 21a in the second radiation portion 21. Further, the feeding phase for the first microwave feeding point 20a in the first radiation portion 20 is the same as the feeding phase for the first microwave feeding point 21a in the second radiation portion 21.

Here, the phase delay of 90 degrees is expressed as a characteristic value at the center frequency (for example, 2450 MHz) in the frequency range used in the microwave heating device.

As described above, by placing the microwave feeding points 20a, 20b, 21a and 21b at predetermined positions in the respective radiation portions 20 and 21, and by employing the first aspect of radiations where there is provided a phase difference of 90 degrees between the microwaves supplied to the microwave feeding points 20a and 20b, and 21a and 21b, the respective radiation portions 20 and 21 are caused to radiate microwaves forming circularly polarized waves.

With reference to Fig. 4, there will be described the mechanism for generating such circularly polarized waves in the first aspect of radiations.

Assuming that, at a time t= t0, the microwaves fed to the first microwave feeding points 20a and 21a have a phase (absolute phase) of 90 degrees, at this time, the phase (absolute phase) of the microwaves fed to the second microwave feeding points 20b and 21b is delayed by 90 degrees from the feeding phase for the first microwave feeding points 20a and 20b and, therefore, is 0 degree.

Accordingly, at the time t=t0, the microwaves from the first microwave feeding points 20a and 21a induce microwave electric fields in directions opposite from each other (microwave electric fields designated by arrows 20A and 21A in Fig. 4). At this time, the microwaves fed to the second microwave feeding points 20b and 21b have a phase (absolute phase) of 0 degree, thereby inducing microwave electric fields with a magnitude of zero.

At a time t=t0+T/4 (T indicates the period), the microwaves fed to the first microwave feeding points 20a and 21a have a phase of 180 degrees, and the microwaves fed to the second microwave feeding points 20b and 21b have a phase of 90 degrees. Therefore, at the time t=t0+T/4, the microwaves from the second microwave feeding points 20b and 21b induce microwave electric fields in the same direction (microwave electric fields designated by arrows 20B and 21B in Fig. 4). At this time, the microwaves fed to the first microwave feeding points 20a and 21a have a phase of 180 degree, thereby inducing microwave electric fields with a magnitude of zero.

At a time t=t0+T/2, the microwaves fed to the first microwave feeding points 20a and 21a have a phase of 270 degrees, and the microwaves fed to the second microwave feeding points 20b and 21b have a phase of 180 degrees. This induces, at the time t=t0+T/2, microwave electric fields (microwave electric fields designated by arrows 20A and 21A in Fig. 4) in the opposite directions from those of the microwave electric fields at the time t=t0.

At a time t=t0+3T/4, the microwaves fed to the first microwave feeding points 20a and 21a have a phase of 360 degrees (0 degree), and the microwaves fed to the second microwave feeding points 20b and 21b have a phase of 270 degrees. This induces, at the time t=t0+3T/4, microwave electric fields (microwave electric fields designated by arrows 20B and 21B in Fig. 4) in the opposite directions from those of the microwave electric fields at the time t=t0+ T/4.

At the time t=t0+4T/4, the microwaves from the first microwave feeding points 20a and 21a induce microwave electric fields in directions opposite from each other (microwave electric fields designated by arrows 20A and 21A in Fig. 4), similarly to at the time t=t0.

When the movements of the microwave electric fields which change with time as described above are overlaid on the surfaces of the radiation portions, as illustrated at a lowermost portion in Fig. 4, the microwave electric fields from the first radiation portion 20 generate right-hand circularly polarized waves, while the microwave electric fields from the second radiation portion 21 generate left-hand circularly polarized waves.

### [Description of Second Aspect of Radiations]

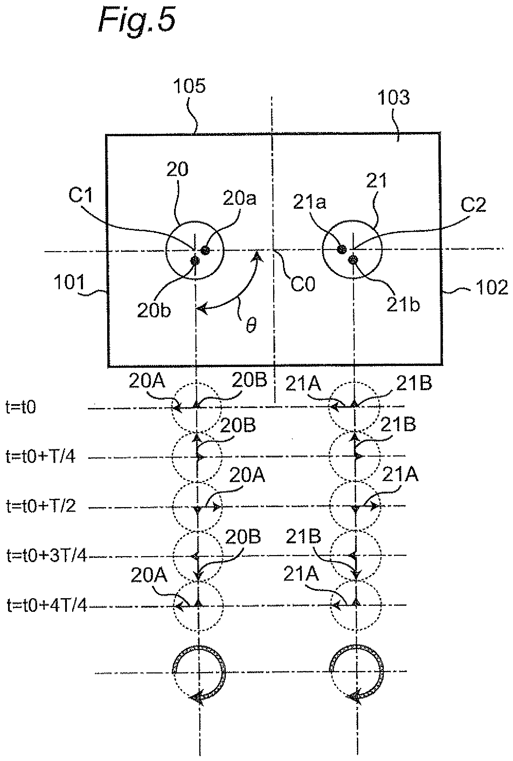

Fig. 5 is a view illustrating a second aspect of radiations from the radiation portions 20 and 21 in the microwave heating device according to the first embodiment of the present invention.

In the second aspect of radiations illustrated in Fig. 5, the second microwave feeding point 20b in the first radiation portion 20 and the second microwave feeding point 2 1 b in the second radiation portion 21 are fed with electricity at a feeding phase delayed by 90 degrees from the feeding phase for the first microwave feeding point 20a in the first radiation portion 20 and, further, the first microwave feeding point 21a in the second radiation portion 21 is fed with electricity at a feeding phase delayed by 180 degrees therefrom.

Here, the phase delay of 90 degrees and the phase delay of 180 degrees are expressed as characteristic values at the center frequency (for example, 2450 Hz) in the frequency range used in the microwave heating device.

In the second aspect of radiations, similarly, with the placement and the structure of the microwave feeding points 20a, 20b, 21a and 21b, and by providing a phase difference of 90 degrees between the microwaves fed to the microwave feeding points 20a, 20b, 21a and 21b, the respective radiation portions 20 and 21 are caused to radiate circularly polarized waves.

With reference to Fig. 5, there will be described the mechanism for generating such circularly polarized waves in the second aspect of radiations.

Assuming that, at a time t= t0, the microwaves fed to the first microwave feeding point 20a in the first radiation portion 20 have a phase (absolute phase) of 90 degrees, at this time, the phase (absolute phase) of the microwaves fed to the second microwave feeding points 20b and 21b is delayed by 90 degrees from the feeding phase for the first microwave feeding point 20a and, therefore, is 0 degree, while the phase (absolute phase) of the microwaves fed to the first microwave feeding point 21a in the second radiation portion 21 is -90 degrees (270 degrees).

Accordingly, at the time t=t0, the microwaves from the first microwave feeding points 20a and 21a induce microwave electric fields in the same direction (microwave electric fields designated by arrows 20A and 21A in Fig. 5). At this time, the microwaves fed to the second microwave feeding points 20b and 21b have a phase of 0 degree, thereby inducing no microwave electric field.

At a time t=t0+T/4 (T indicates the period), the microwaves fed to the first microwave feeding points 20a and 2 1 a have respective phases of 180 degrees and 360 degrees, and the microwaves fed to the second microwave feeding points 20b and 21b have a phase of 90 degrees. This induces, at the time t=t0+T/4, microwave electric fields (microwave electric fields designated by arrows 20B and 21B in Fig. 5). At this time, the microwaves fed to the first microwave feeding points 20a and 21a have respective phases of 180 degree and 360 degrees, thereby inducing no microwave electric field.

At a time t=t0+T/2, the microwaves fed to the first microwave feeding points 20a and 21a have respective phases of 270 degrees and 90 degrees, and the microwaves fed to the second microwave feeding points 20b and 21b have a phase of 180 degrees. This induces, at the time t=t0+T/2, microwave electric fields (microwave electric fields designated by arrows 20A and 21A in Fig. 5) in the opposite directions from those of the microwave electric fields represented at the time t=t0.

At a time t=t0+3T/4, the microwaves fed to the first microwave feeding points 20a and 21a have respective phases of 360 degrees and 180 degrees, and the microwaves fed to the second microwave feeding points 20b and 21b have a phase of 270 degrees. This induces, at the time t=t0+3T/4, microwave electric fields (microwave electric fields designated by arrows 20B and 21B in Fig. 5) in the opposite directions from those of the microwave electric fields represented at the time t=t0+ T/4.

At the time t=t0+4T/4, the microwaves from the first microwave feeding points 20a and 21a induce microwave electric fields in the same direction (microwave electric fields designated by arrows 20A and 21A in Fig. 5), similarly to at the time t=t0.

When the movements of the microwave electric fields which change with time as described above are overlaid on the surfaces of the radiation portions, as illustrated at a lowermost portion in Fig. 5, the microwave electric fields from the first radiation portion 20 and the second radiation portion 21 induce the same right-hand circularly polarized waves.

### [Description of Third Aspect of Radiations]

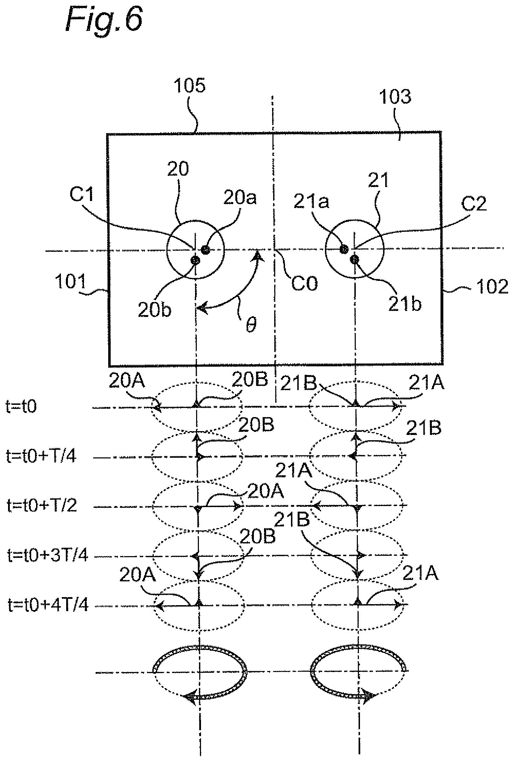

Fig. 6 is a view illustrating a third aspect of radiations from the radiation portions 20 and 21 in the microwave heating device according to the first embodiment of the present invention.

In the third aspect of radiations illustrated in Fig. 6, the amounts of microwave electric power fed to the first microwave feeding points 20a and 21a in the respective radiation portions 20 and 21 are made larger than the amounts of microwave electric power fed to the second microwave feeding points 20b and 21b.

The feeding phases for the respective microwave feeding points 20a, 20b, 21a and 21b are the same as those in the first aspect of radiations illustrated in Fig. 4. Namely, in the respective radiation portions 20 and 21, the second microwave feeding points 20b and 21b are fed with electricity at a feeding phase delayed by 90 degrees from the feeding phase for the first microwave feeding points 20a and 21a.

In the third aspect of radiations, similarly, with the placement and the structure of the microwave feeding points 20a, 20b, 21a and 21b, and by providing a phase difference of 90 degrees between the microwaves fed to the microwave feeding points 20a, 20b, 21a and 21b, the respective radiation portions 20 and 21 are caused to radiate circularly polarized waves with an elliptical circling shape.

With reference to Fig. 6, there will be described the mechanism for generating such elliptical-shaped circularly polarized waves in the third aspect of radiations.

Assuming that, at a time t= t0, the microwaves fed to the first microwave feeding points 20a and 21a have a phase (absolute phase) of 90 degrees, at this time, the phase (absolute phase) of the microwaves fed to the second microwave feeding points 20b and 2 1 b is delayed by 90 degrees from the feeding phase for the first microwave feeding points 20a and 20b and, therefore, is 0 degree.

A microwave electric field induced by feeding electricity has a magnitude which is proportional to the amount of microwave electric power supplied thereto. Therefore, in the third aspect of radiations, the microwaves from the first microwave feeding points 20a and 21a induce microwave electric fields with a larger magnitude than that of the microwave electric fields induced by the microwaves from the second microwave feeding points 20b and 21b. Accordingly, in Fig. 6, the microwave electric fields excited by the first microwave feeding points 20a and 21a are indicated by arrows having a larger length than that of arrows indicating the microwave electric fields excited by the second microwave feeding points 20b and 21b.

At a time t=t0, the microwaves from the first microwave feeding points 20a and 21a induce microwave electric fields in directions opposite from each other (microwave electric fields designated by arrows 20A and 21A in Fig. 6).

At a time t=t0+T/4 (T indicates the period), the microwaves fed to the first microwave feeding points 20a and 21a have a phase of 180 degrees, and the microwaves fed to the second microwave feeding points 20b and 21b have a phase of 90 degrees. Therefore, at the time t=t0+T/4, the microwaves from the second microwave feeding points 20b and 21b induce microwave electric fields in the same direction (microwave electric fields designated by arrows 20B and 21B in Fig. 6).

At a time t=t0+T/2, the microwaves fed to the first microwave feeding points 20a and 21a have a phase of 270 degrees, and the microwaves fed to the second microwave feeding points 20b and 21b have a phase of 180 degrees. This induces, at the time t=t0+T/2, microwave electric fields (microwave electric fields designated by arrows 20A and 21A in Fig. 6) in the opposite directions from those of the microwave electric fields represented at the time t=t0.

At a time t=t0+3T/4, the microwaves fed to the first microwave feeding points 20a and 21a have a phase of 360 degrees (0 degree), and the microwaves fed to the second microwave feeding points 20b and 21b have a phase of 270 degrees. This induces, at the time t=t0+3T/4, microwave electric fields (microwave electric fields designated by arrows 20B and 21B in Fig. 6) in the opposite directions from those of the microwave electric fields represented at the time t=t0+T/4.

At the time t=t0+4T/4, the microwaves from the first microwave feeding points 20a and 2 1 a induce microwave electric fields (microwave electric fields designated by arrows 20A and 2 1A in Fig. 6) in directions opposite from each other, similarly to at the time t=t0.

When the movements of the microwave electric fields which change with time as described above are overlaid on the surfaces of the radiation portions, as illustrated at a lowermost portion in Fig. 6, the microwave electric fields from the first radiation portion 20 induce right-hand circularly polarized waves with an elliptical shape, while the microwave electric fields from the second radiation portion 21 induce left-hand circularly polarized waves with an elliptical shape.

In the microwave heating device according to the first embodiment which has been described above, since the two microwave feeding points 20a and 20b are placed orthogonally to each other in the first radiation portion 20, the microwaves supplied to the respective microwave feeding points 20a and 20b are radiated within the heating chamber, such that the electric powers of these microwaves are synthesized. Further, since the two microwave feeding points 21a and 21b are placed orthogonally to each other in the second radiation portion 21, the microwaves supplied to the respective microwave feeding points 21a and 21b are radiated within the heating chamber, such that the electric powers of these microwaves are synthesized.

Accordingly, with the structure of the microwave heating device according to the first embodiment of the present invention, by providing plural microwave generating means capable of generating relatively-smaller amounts of electric power and, further, by providing plural microwave feeding points in each radiation portion, it is possible to realize a structure capable of supplying larger electric power to the inside of the heating chamber, without increasing the number of radiation portions.

Further, by controlling the phase difference between the microwaves fed to the two microwave feeding points which are orthogonally placed in each radiation portion to be 90 degrees, it is possible to generate, from the radiation portions, microwave radiation patterns for forming circularly polarized waves.

Regarding the phase difference between the microwaves fed to the two microwave feeding points orthogonally placed in each radiation portion, assuming that the phase of the microwaves supplied to one of the microwave feeding portions is defined as a reference (0 degree), by changing the phase of the microwaves supplied to the other microwave feeding point to 90 degrees or -90 degrees (or -90 degrees or -270 degrees), it is possible to change the direction of circling of circularly polarized waves.

With the structure of the microwave heating device according to the first embodiment of the present invention, it is possible to disperse the microwaves radiated from the radiation portions over the entire heating chamber and, furthermore, it is possible to change over among aspects of radiations for forming various microwave-radiation patterns, thereby changing the microwave distribution within the heating chamber to desired states for facilitating heating of to-be-heated objects.

Further, in the first aspect of radiations (see Fig. 4) in the microwave heating device according to the first embodiment, in addition to delaying the feeding phase for the microwave feeding point 20b by 90 degrees from the feeding phase for the first microwave feeding point 20a in the first radiation portion 20 and by delaying the feeding phase for the microwave feeding point 21b by 90 degrees from the feeding phase for the first microwave feeding point 21a in the second radiation portion 21, it is possible to arbitrarily change the phase difference between the first microwave feeding point 20a in the first radiation portion 20 and the first microwave feeding point 21a in the second radiation portion 2 1.

By changing the phase difference between the microwaves radiated from the two radiation portions 20 and 21, as described above, it is possible to change the positions at which the microwaves radiated from the respective radiation portions 20 and 21 come into collision with each other, in the space within the heating chamber. This enables dispersing the distribution of microwaves within the heating chamber, thereby facilitating uniformization of heating of to-be-heated objects.

### [Heating Operations]

There will be described operations for heating a to-be-heated object with the microwave heating device having the aforementioned structure according to the first embodiment.

At first, the openable door is opened, the to-be-heated object is placed on the placement plate 25 in the heating chamber 100, and the openable door is closed to seal the heating chamber 100. A user inputs conditions for heating this to-be-heated object, to an operation portion (not illustrated) provided in the microwave heating device and, then, the user pushes a heating start key. Since the heating start key has been pushed, a heating start signal is created and is inputted to the control portion 22. The control portion 22, to which the heating start signal has been inputted, outputs a control signal to the microwave generating portion 10, which causes the microwave generating portion 10 to start operating. At this time, the control portion 22 drives and controls the microwave generating portion 10, based on various types of information, such as the heating conditions Q for the to-be-heated object. Further, the control portion 22 operates a driving power supply (not illustrated) provided in the microwave heating device, for supplying electric power to the oscillation portion 11, the initial-stage amplification portions 14a to 14d, and the main amplification portions 15a to 15d.

When the microwave generating portion 10 starts operating, in the phase variable portions 19a to 19d, as an initial condition, the amounts of phase delays (the relative phases) in the phase variable portion 19a and the phase variable portion 19c, which are associated with the first microwave feeding point 20a in the first radiation portion 20 and the first microwave feeding point 21a in the second radiation portion 21, are set to 0 degree. Further, the amounts of phase delays (the relative phases) in the phase variable portions 19b and 19d, which are associated with the second microwave feeding point 20b in the first radiation portion 20 and the second microwave feeding point 21b in the second radiation portion 21, are set to 90 degrees.

When the control portion 22 operates the driving power supply for supplying electric power to the oscillation portion 11, the oscillation portion 11 is supplied with a signal for setting the initial oscillation frequency of the oscillation portion 11 to 2400 MHz, for example and, then, the oscillation portion 11 starts operating. After the oscillation portion 11 starts operating, the output from the oscillation portion 11 is divided into four parts, by the electric-power dividing portion 12, to form four microwave electric-power signals. Thereafter, the driving power supply is controlled for driving the initial-stage amplification portions 14a to 14d and the main amplification portions 15a to 15d.

In the microwave generating portion 10, the microwave electric-power signals pass through the initial-stage amplification portions 14a to 14d, the main amplification portions 15a to 15d, and the electric-power detection portions 18a to 18d, which are operated in parallel, to form desired electric powers, which are outputted from the respective output portions 16a to 16d. The respective outputs from the microwave generating portion 10 are transmitted to the microwave feeding points 20a, 20b, 21a and 21b in the radiation portions 20 and 21 and, then, are radiated, therefrom, to the inside of the heating chamber 100.

In the microwave heating device according to the first embodiment, each of the main amplification portions 15a to 15d is structured to output microwave electric power equivalent to 1/10 the rated output, such as microwave electric power of less than 50 W, such as 20 W, for example, in a stage prior to the start of actual heating of the to-be-heated object.

If the to-be-heated object absorbs 100 % of the microwave electric power supplied to the inside of the heating chamber 100, no reflected electric power transmitted toward the microwave generating portion 10 from the heating chamber 100 is generated. However, since the electric characteristics of the heating chamber 100 including the to-be-heated object are determined by the type, the shape and the volume of the to-be-heated object, the to-be-heated object does not absorb all the supplied microwave electric power, which induces reflected electric power transmitted toward the microwave generating portion 10 from the heating chamber 100, based on the output impedance of the microwave generating portion 10 and the impedance of the heating chamber 100.

The electric-power detection portions 18a to 18d are adapted to be coupled to at least the reflected electric power transmitted toward the microwave generating portion 10 from the heating chamber 100, in the microwave transmission paths 17a to 17d, and to output detection signals proportional to the amounts of the reflected electric power (the amounts of reflected microwaves). The detection signals are inputted to the control portion 22, which calculates the total sum of the detection signals outputted from the respective electric-power detection portions 18a to 18d.

This calculation is performed for all frequencies within the frequency range used in the microwave heating device (with a pitch of 1 MHz, for example). Based on the results of the calculations, the control portion 22 extracts frequencies each of which causes the total sum of the signals corresponding to the reflected electric power to have a minimum value with respect to the frequency and, further, selects a frequency which causes this total sum to have a smallest value, out of the group of plural minimum values, as an oscillation frequency in heating the to-be-heated object (a frequency selection operation).

The aforementioned frequency selection operation is performed in a stage prior to the start of actual heating operations on the to-be-heated object. In this frequency selection operation, the control portion 22 increases the oscillating frequency of the oscillation portion 11 from an initial value of 2400 MHz to an upper limit of 2500 MHz within the frequency variation range, with a 1-MHz pitch (for example, a variation speed of 1 MHz per 10 milliseconds). The frequencies each of which caused the total sum of the signals corresponding to the reflected electric power to be minimum, and the signals corresponding to the reflected electric power at these frequencies, which have been obtained through the frequency variation, are stored.

The control portion 22 selects, as an optimum oscillation frequency, a frequency which caused the signals corresponding to the reflected electric power to have a smallest value, out of the group of frequencies each of which caused the total sum of the signals corresponding to the reflected electric power to have a minimum value. Further, the control portion 22 controls the oscillation portion 11 such that it oscillates at the selected optimum oscillation frequency and, further, controls the microwave generating portion 10 in such a way as to generate outputs corresponding to the set heating conditions Q.

If the inputted heating conditions Q are such conditions that heating operations should be performed on the to-be-heated object with the rated output, in the microwave generating portion 10, each of the main amplification portions 15a to 15d is caused to output microwave electric power of 200 W to 300 W, for example, in the actual heating operations on the to-be-heated object. The outputs from the respective main amplification portions 15a to 15d are transmitted to the microwave feeding points 20a, 20b, 21a and 21b in the radiation portions 20 and 21 and, further, are radiated therefrom to the inside of the heating chamber 100.

In the microwave heating device according to the first embodiment, based on detection signals from an infrared-ray detection portion adapted to detect the temperature at the surface of the to-be-heated object, which is provided for monitoring the state of progress of heating of the to-be-heated object, or based on detection signals indicative of amounts of reflected electric power detected by the respective electric-power detection portions 18a to 18d, the amounts of phase delays in the phase variable portions 19a to 19d are variably controlled, in order to finish the heating of the to-be-heated object in a desired state. The combination of the amounts of phase delays in the phase variable portions 19a to 19d can be determined by, for example, combining the first to third aspects of radiations described in the first embodiment, and by properly making selections therefrom according to the heating conditions Q for the to-be-heated object, the detection information P and the heating information R.

Further, while the microwave heating device according to the first embodiment has been described as having a structure which places the two radiation portions 20 and 21 on the bottom wall surface, at positions symmetrical with respect to the center line (the line designated by the reference character Y in Fig. 3) in the forward and rearward directions of the device, the radiation portions can be placed at positions symmetrical with respect to the center line (the line designated by the reference character X in Fig. 3) in the leftward and rightward directions of the device.

Also, the two radiation portions 20 and 21 can be structured such that their relative phases are variable, and the aforementioned first to third aspects of radiations can be properly combined for performing heating operations on to-be-heated objects.

Further, while there has been described an example where the microwave heating device according to the first embodiment employs the two radiation portions 20 and 21, the present invention can be also applied to a microwave heating device having a structure provided with two or more radiation portions according to specifications of the microwave heating device, and the like.

### (Second Embodiment)

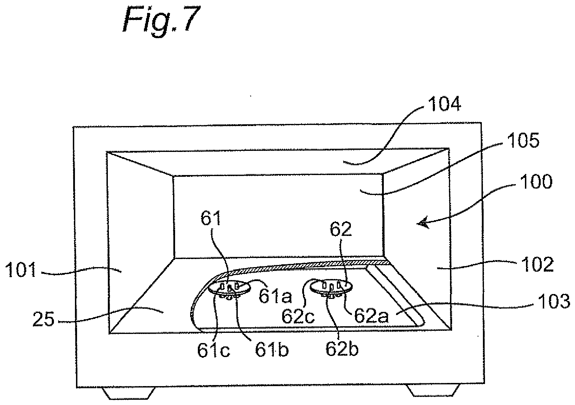

Next, there will be described a microwave heating device according to a second embodiment of the present invention, with reference to Figs. 7 to 11. The microwave heating device according to the second embodiment is different from the microwave heating device according to the aforementioned first embodiment in that each radiation portion has three microwave feeding points, but is the same as the microwave heating device according to the first embodiment in terms of the other points. Accordingly, in the description of the second embodiment, components having the same functions and structures as those of the aforementioned first embodiment will be designated by the same reference characters, and descriptions thereof will be omitted by substituting the description in the first embodiment therefor.

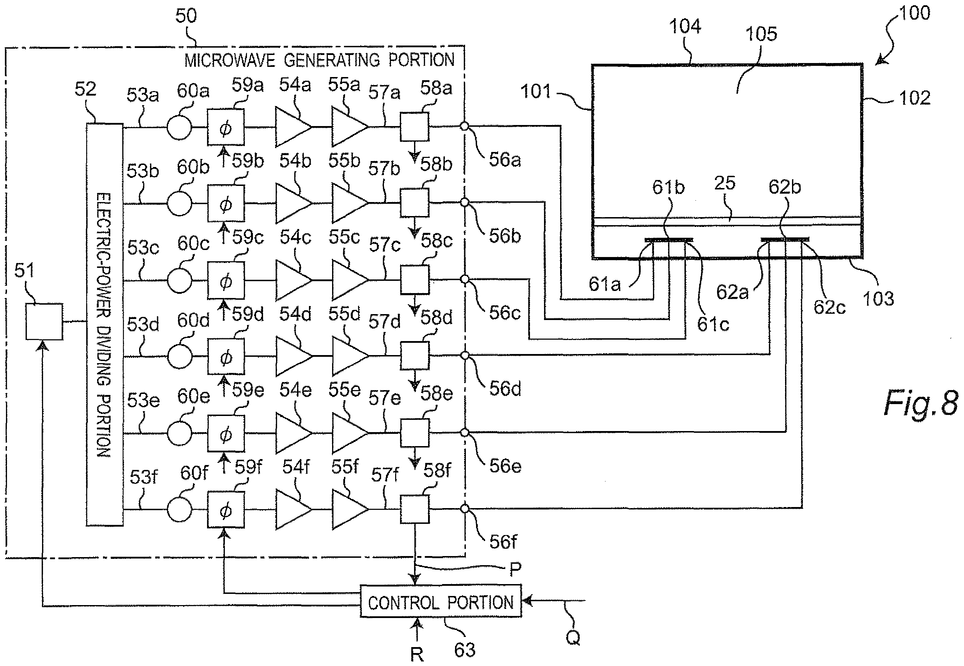

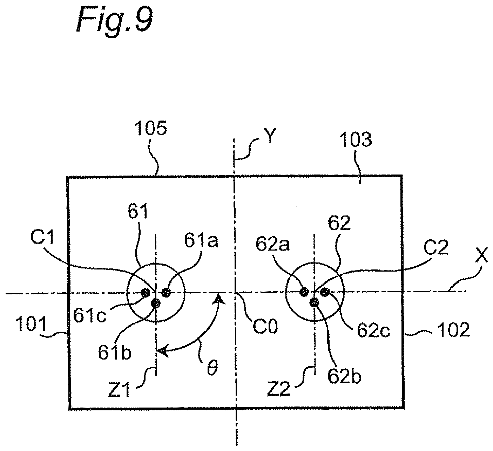

Fig. 7 is a perspective view illustrating the inside of a heating chamber 100 in a microwave oven as a microwave heating device according to a second embodiment. In Fig. 7, the inside of the heating chamber 100 is cutout at a portion (a placement plate 25) thereof, and an openable door for opening and closing the heating chamber 100 is not illustrated. Fig. 8 is a block diagram illustrating the structure of the microwave heating device according to the second embodiment. Fig. 9 is a plan view illustrating radiation portions 61 and 62 placed on a bottom wall surface in the microwave heating device according to the second embodiment.

As illustrated in Fig. 7, in the microwave heating device according to the second embodiment, the heating chamber 100 is constituted by a left wall surface 101, a right wall surface 102, the bottom wall surface 103, an upper wall surface 104 and a back wall surface 105 which are made of a metal material and, further, is constituted by the openable door (not illustrated) adapted to be opened and closed for housing the to-be-heated object therein. In the heating chamber 100, the two radiation portions 61 and 62 are provided on the bottom wall surface 103.

As illustrated in Fig. 8, a microwave generating portion 50 is constituted by an oscillation portion 51 constituted by a semiconductor device, an electric-power dividing portion 52 for dividing the output of the oscillation portion 51 into six parts, initial-stage amplification portions 54a, 54b, 54c, 54d, 54e and 54f (which will be referred to as 54a to 54f, and other plural components will be similarly abbreviated, in the following description) which are supplied with the respective outputs of the electric-power dividing portion 52 through microwave transmission paths 53a to 53f, main amplification portions 55a to 55f for further amplifying the respective outputs of the initial-stage amplification portions 54a to 54f, electric-power detecting portions 58a to 58f inserted in microwave transmission paths 57a to 57f for directing the respective outputs of the main amplification portions 55a to 55f to output portions 56a to 56f, phase variable portions 59a to 59f inserted in the microwave transmission paths 53a to 53f, and changeover portions 60a to 60f inserted in the microwave transmission paths 53a to 53f. The oscillation portion 51, the initial-stage amplification portions 54a to 54f, and the main amplification portions 55a to 55f in the microwave generating portion 50 are constituted by respective semiconductor devices. Further, the changeover portions 60a to 60f are structured to change over between cutoff and transmission of microwaves in the respective microwave transmission paths 53a to 53f.

As illustrated in Fig. 9, on the bottom wall surface 103 forming the heating chamber 100, there are placed the plural (two, in the first embodiment) radiation portions (61, 62) for radiating and supplying microwaves to the inside of the heating chamber 100. The two radiation portions (the first radiation portion 61 and the second radiation portion 62) according to the second embodiment are placed at positions symmetrical with respect to a center line in the forward and rearward direction of the device (a line represented by a reference character Y in Fig. 9), which passes through an approximate-center point (C0) of the bottom wall surface 103.

The first radiation portion 61 has three microwave feeding portions 61a, 61b and 61c, wherein the respective outputs of the microwave generating portion 50 are directed to the microwave feeding points 61a, 61b and 61c. Similarly, the second radiation portion 62 has three microwave feeding portions 62a, 62b and 62c, wherein the respective outputs of the microwave generating portion 50 are directed to the microwave feeding points 62a, 62b and 62c. These microwave feeding portions 61a, 61b and 6 1 c and 62a, 62b and 62c are placed at positions symmetrical with respect to the center line in the forward and rearward directions of the device (the line designated by a reference character Y in Fig. 9), which passes through an approximate-center point of the bottom wall surface 103.

The first radiation portion 61 and the second radiation portion 62 are antennas having a substantially-circular shape, and the first microwave feeding portions 61a and 62a and the third microwave feeding portions 61c and 62c are placed on the line connecting the respective center points C1 and C2 to each other (a line represented by a reference character X in Fig. 9). The second microwave feeding portions 61b and 62b are placed on respective lines (lines designated by reference characters Z1 and Z2 in Fig. 9) which pass through the center points C1 and C2 and are orthogonal to the line X connecting the center points C1 and C2 to each other.

The respective microwave feeding points 61a, 61b and 61c and 62a, 62b and 62c are placed such that they are spaced apart by predetermined distances from the respective center points C1 and C2 of the radiation portions 61 and 62, in order to attain impedance matching.

As described above, in the first radiation portion 6 1, the line X connecting the first microwave feeding point 61a, the third microwave feeding point 61c and the center point C1 to each other, and the line Z1 connecting the second microwave feeding point 61b and the center point C1 to each other are placed to form an intersection angle θ of 90 degrees, therebetween. Similarly, in the second radiation portion 62, the line X connecting the first microwave feeding point 62a, the third microwave feeding point 62c and the center point C2 to each other, and the line Z2 connecting the second microwave feeding point 62b and the center point C2 to each other are placed to form an intersection angle θ of 90 degrees, therebetween.

In the microwave heating device according to the second embodiment, the initial-stage amplification portions 54a to 54f and the main amplification portions 55a to 55f include circuits formed from conductive patterns formed on a single surface of a dielectric substrate made of a low dielectric loss material, wherein, in order to preferably operate the semiconductor devices constituting the amplification devices in the respective amplification portions provided in the circuits, each of the semiconductor devices is provided with matching circuits at the input and output sides thereof.

The microwave transmission paths 53a to 53f and 57a to 57f are formed from transmission circuits with characteristic impedances of about 50 ohms, from conductive patterns provided on a single surface of a dielectric substrate.

The electric-power dividing portion 52 has a two-stage structure having a wilkinson-type electric-power two-division structure and, further, having electric-power three-division structures provided at the respective outputs of the electric-power two-division structure. In the second embodiment, since the wilkinson-type electric-power division structure is employed, the microwaves ideally have the same phase at the output terminals of the electric-power dividing portion 52.

Between the electric-power dividing portion 52 and the initial-stage amplification portions 54a to 54f, there are provided the phase variable portions 59a to 59f. The phase variable portions 59a to 59f are reflection-type phase circuits each having a circuit structure incorporating a variable capacitance diode therein.

Regarding characteristics of the reflection-type phase circuits, the variable capacitance diodes are selected, and the applied-voltage variation range thereof is set, such that phase delays of up to 180 degrees or more can be induced by varying the voltages applied to the variable capacitance diodes, with respect to transmission of a center frequency within a frequency range used in the microwave heating device.

By controlling the operations of the phase variable portions 59a to 59f having the aforementioned structure, it is possible to vary, up to 180 degrees or more, the respective outputs from the output portions 56a to 56f in the microwave generating portion 50, namely the phase delays among the microwave feeding points 61a, 61b, 61c, 62a, 62b and 62c in the respective radiation portions 61 and 62.

The changeover portions 60a to 60f provided in the respective microwave transmission paths 53a to 53f are constituted by microwave switches and, further, are structured such that they transmit microwaves to the respective phase variable portions 59a to 59f, when voltages are applied to the changeover portions 60a to 60f. Accordingly, with the microwave heating device according to the second embodiment, it is possible to perform control for supplying or stopping microwaves to the respective microwave feeding points 61a, 61b, 61c, 62a, 62b and 62c in the respective radiation portions 61 and 62.

The electric-power detection portions 58a to 58f are adapted to detect microwave electric power transmitted from the microwave generating portion 50 toward the heating chamber 100 (hereinafter, referred to as the amounts of supplied microwaves), and electric power of so-called reflected waves which are transmitted from the heating chamber 100 to the microwave generating portion 50 (hereinafter, referred to as the amounts of reflected microwaves). Also, the electric-power detection portions 58a to 58f can be also structured to detect at least the amounts of reflected microwaves. The electric-power detection portions 58a to 58f are adapted to extract amounts of electric power which are about 1/10000 the amounts of reflected microwaves and/or the amounts of supplied microwaves transmitted through the microwave transmission paths 57a to 57f, by setting the degree of electric-power coupling to about 40 dB, for example.

The electric-power signals extracted as described above are subjected to rectification by detector diodes (not illustrated) and, then, are subjected to smoothing processing by capacitors (not illustrated), and the signals having been subjected to the smoothing processing are inputted to a control portion 63.

The control portion 63 controls the oscillating frequency and the oscillating output of the oscillation portion 51, which is a constituent of the microwave generating portion 50, and further controls the voltages applied to the phase variable portions 59a to 59f and controls the applications of voltages to the changeover portions 60a to 60f, based on conditions for heating a to-be-heated object, which have been inputted by a user (an arrow Q in Fig. 8), detection information from the respective electric-power detection portions 58a to 58f (an arrow P in Fig. 8), and heating information acquired from various types of sensors for detecting the state where the to-be-heated object is being heated during heating (an arrow R in Fig. 8). As a result thereof, the to-be-heated object being housed within the heating chamber 100 can be optimally heated, based on the heating conditions (Q) set by the user, the heating information (R) indicating the state where the to-be-heated object is being heated, and the detection information (P) from the electric-power detection portions 58a to 58f.

Further, in the microwave heating device according to the second embodiment, the microwave generating portion 50 is provided with cooling fins (not illustrated), for example, as heat-dissipation means for dissipating heat generated from the semiconductor devices. Further, within the heating chamber 100, there is provided a placement plate 25 for covering the radiation portions 61 and 62 provided on the bottom wall surface 103 and for placing and housing a to-be-heated object thereon, wherein the placement plate 25 is made of a low dielectric loss material.

### [Aspects of Radiations]

Next, there will be described the radiation portions 61 and 62 in the microwave heating device having the aforementioned structure according to the second embodiment, in terms of aspects of radiations and operations thereof. Further, in aspects of radiations from the radiation portions 61 and 62 according to the second embodiment, similarly, by placing the microwave feeding points in such a way as to provide the same placement and structure as those of the aforementioned first embodiment and, further, by performing control in such a way as to operate two microwave feeding points in each of the radiation portions 61 and 62 using the changeover portions 60a to 60f, it is possible to radiate circularly polarized waves therefrom. Namely, by cutting off the microwaves fed to the third microwave feeding points 61c and 62c in the radiation portions 61 and 62 according to the second embodiment, through the changeover portions 60c and 60f corresponding thereto, it is possible to realize the same placement and structure as those of the aforementioned first embodiment, thereby enabling radiations of microwaves in the aforementioned first to third aspects of radiations.

Accordingly, in the following description, there will be described other aspects of radiations using the microwave feeding points 61c and 62c which are newly added in the second embodiment.

### [Description of Fourth Aspect of Radiations]

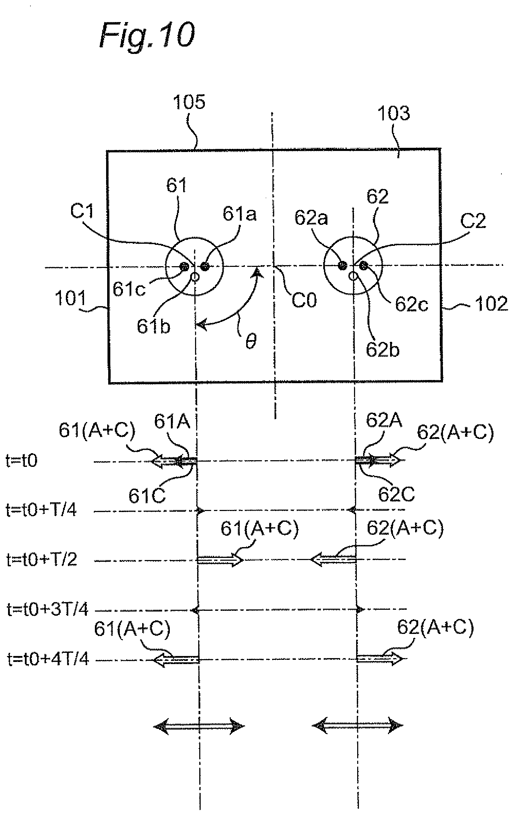

Fig. 10 is a view illustrating a fourth aspect of radiations from the radiation portions 61 and 62 in the microwave heating device according to the second embodiment.

In the forth aspect of radiations illustrated in Fig. 10, the third microwave feeding points 61c and 62c are fed with electricity at a feeding phase delayed by 180 degrees from the feeding phase for the first microwave feeding points 61a and 62a in the respective radiation portions 61 and 62. Further, feeding of electricity to the second microwave feeding points 61b and 62b is cut off. In Fig. 10, the microwave feeding points which are fed with electricity (61a, 61c, 62a, 62c) are indicated by black circle marks, while the microwave feeding points which are not fed with electricity (61b, 61b) are indicated by while circle marks.

Here, the phase delay of 180 degrees is expressed as a characteristic value at the center frequency (for example, 2450 MHz) in the frequency range used in the microwave heating device.

As described above, by placing the microwave feeding points 61a, 61b, 61c, 62a, 62b and 62c in the respective radiation portions 61 and 62, and by employing the fourth aspect of radiations where there is provided a phase difference of 180 degrees between the microwaves supplied to the microwave feeding points 61a and 61c, and 62a and 62c, as will be described later, the two microwave electric powers supplied to the respective radiation portions 61 and 62 are synthesized, thereby causing radiations of microwaves as linearly polarized waves therefrom.

With reference to Fig. 10, there will be described the mechanism for synthesizing the electric power and for generating such linearly polarized waves in the fourth aspect of radiations.

Assuming that, at a time t= t0, the microwaves fed to the first microwave feeding points 61a and 62a have a phase (absolute phase) of 90 degrees, at this time, the phase (absolute phase) of the microwaves fed to the third microwave feeding points 61c and 62c is delayed by 180 degrees from the feeding phase for the first microwave feeding points 61a and 62a and, therefore, is -90 degrees (270 degrees).

Accordingly, at the time t=t0, the microwaves from the first microwave feeding point 61a in the first radiation portion 61 and from the first microwave feeding point 62a in the second radiation portion 62 induce microwave electric fields in directions opposite from each other (microwave electric fields designated by arrows 61A and 62A in Fig. 10).

On the other hand, at the time t=t0, the microwaves fed to the third microwave feeding points 61c and 62c induce microwave electric fields in the same directions as those of the microwave electric fields 61A and 62A induced by the microwaves fed to the first microwave feeding points 61a and 62a, as designated by arrows 61C and 62C in Fig. 10, since the microwaves fed to the third microwave feeding points 61c and 62c have a phase delayed by 180 degrees from that of the microwaves to the first microwave feeding points 61a and 62a. As a result thereof, the two microwave electric fields induced by the microwaves fed to the first microwave feeding points 61a and 62a and the third microwave feeding points 61c and 62c are synthesized (61(A+C)), 62(A+C)).

In Fig. 10 the microwave electric field 61(A+C) indicates the two microwave electric fields synthesized with each other, namely there is held the following: the microwave electric field 61(A+C)=(61A+61C). Similarly, the microwave electric field 62(A+C) indicates the two microwave electric fields synthesized with each other, namely there is held the following: the microwave electric field 62(A+C)=(62A+62C).

At a time t=t0+T/4 (T indicates the period), the microwaves fed to the first microwave feeding points 61a and 62a have a phase of 180 degrees, and the microwaves fed to the third microwave feeding points 61c and 62c have a phase of 0 degree. Therefore, at the time t=t0+T/4, the microwave electric fields have a magnitude of zero.

At a time t=t0+T/2, the microwaves fed to the first microwave feeding points 61a and 62a have a phase of 270 degrees, and the microwaves fed to the third microwave feeding points 61c and 62c have a phase of 90 degrees. This induces, at the time t=t0+T/2, microwave electric fields (microwave electric fields designated by thick arrows 61(A+C) and 62(A+C) in Fig. 10) in the opposite directions from those of the microwave electric fields at the time t=t0, and their electric power is synthesized.

At a time t=t0+3T/4, the microwaves fed to the first microwave feeding points 61a and 62a have a phase of 360 degrees (0 degree), and the microwaves fed to the third microwave feeding points 61c and 62c have a phase of 180 degrees. Therefore, at the time t=t0+3T/4, the microwave electric fields have a magnitude of zero, similarly to at the time t=t0+T/4.

At the time t=t0+4T/4, similarly to at the time t=t0, the microwaves fed to the first microwave feeding points 61a and 62a and the third microwave feeding points 61c and 62c induce two microwave electric fields synthesized with each other (synthesized microwave electric fields designated by 61(A+C) and 62(A+C) in Fig. 10).

When the movements of the microwave electric fields which change with time as described above are overlaid on the surfaces of the radiation portions, as illustrated at a lowermost portion in Fig. 10, the first radiation portion 61 and the second radiation portion 62 generate linearly polarized waves, in a state where the two microwave electric powers supplied thereto are synthesized.

Further, the respective linearly polarized waves generated from the first radiation portion 61 and the second radiation portion 62 are such that the microwave electric fields therefrom are in directions opposite from each other at the same time point.

### [Description of Fifth Aspect of Radiations]

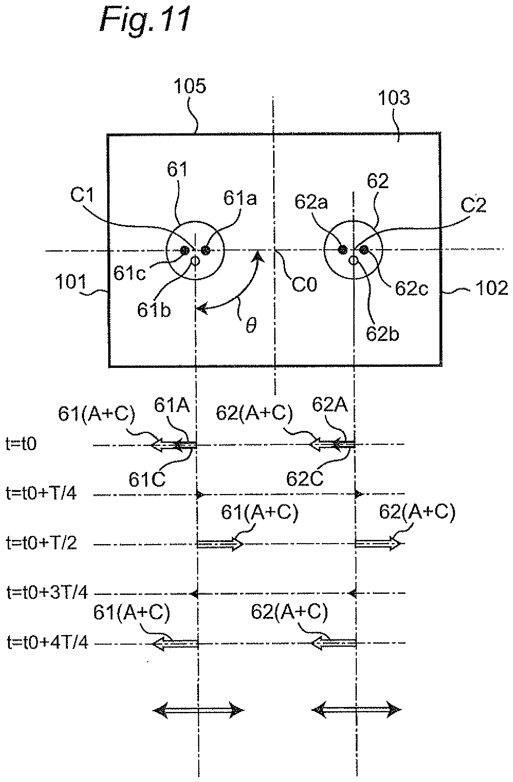

Fig. 11 is a view illustrating a fifth aspect of radiations from the radiation portions 61 and 62 in the microwave heating device according to the second embodiment.

In the fifth aspect of radiations illustrated in Fig. 11, the third microwave feeding point 61c in the first radiation portion 61 and the first microwave feeding point 62a in the second radiation portion 62 are fed with electricity at a feeding phase delayed by 180 degrees from the feeding phase for the first microwave feeding point 61a in the first radiation portion 61, while the feeding phase for the third microwave feeding point 62c in the second radiation portion 62 is set to be the same as the feeding phase for first microwave feeding point 61a in the first radiation portion 6 1. Further, electricity fed to the second microwave feeding points 61b and 62b is cut off. In Fig. 11, the microwave feeding points which are fed with electricity (61a, 61c, 62a, 62c) are designated by black circle marks, while the microwave feeding points which are not fed with electricity (61b, 62b) are designated by white circle marks. Here, the phase delay of 180 degrees is expressed as a characteristic value at the center frequency (for example, 2450 MHz) in the frequency range used in the microwave heating device.

By placing the microwave feeding points 61a, 6 1 b, 61c, 62a, 62b and 62c in the respective radiation portions 61 and 62 as described above, and by employing the fifth aspect of radiations where the certain microwave feeding points 61a, 61c, 62a and 62c are supplied with microwaves, and there is provided a phase difference of 180 degrees between the microwaves supplied to the microwave feeding points 61a and 61c and 62a and 62c, the two microwave electric powers supplied to the respective radiation portions 61 and 62 are synthesized, thereby causing radiations of microwaves as linearly polarized waves therefrom.

With reference to Fig. 11, there will be described the mechanism for synthesizing electric power and for generating such linearly polarized waves in the fifth aspect of radiations.

Assuming that, at a time t= t0, the microwaves fed to the first microwave feeding point 61a in the first radiation portion 61 have a phase (absolute phase) of 90 degrees, the phase (absolute phase) of the microwaves fed to the third microwave feeding point 61c in the first radiation portion 61 and the first microwave feeding point 62a in the second radiation portion 62 is delayed by 180 degrees from the feeding phase for the first microwave feeding point 61a and, therefore, is -90 degrees (270 degrees). Further, the microwaves fed to the microwave feeding point 62c in the second radiation portion 62 have a phase of 90 degrees.

Accordingly, at the time t=t0, the microwaves from the microwave feeding point 61a in the first radiation portion 61 and the first microwave feeding point 62a in the second radiation portion 62 induce microwave electric fields in the same direction (microwave electric fields designated by arrows 61A and 62A in Fig. 11).

On the other hand, at the time t=t0, the microwaves fed to the third microwave feeding points 61c and 62c induce microwave electric fields in the same directions as those of the microwave electric fields 61A and 62A induced by the microwaves fed to the first microwave feeding points 61a and 62a, as designated by arrows 61C and 62C in Fig. 11, since the microwaves fed to the third microwave feeding points 61c and 62c have a phase delayed by 180 degrees from that of the microwaves to the first microwave feeding points 61a and 62a. As a result thereof, the two microwave electric fields induced by the microwaves fed to the first microwave feeding points 61a and 62a and the third microwave feeding points 61c and 62c are synthesized (61(A+C)), 62(A+C)).

In Fig. 11, the microwave electric field 61(A+C) indicates the two microwave electric fields synthesized with each other, namely there is held the following: the microwave electric field 61(A+C)=(61A+61C). Similarly, the microwave electric field 62(A+C) indicates the two microwave electric fields synthesized with each other, namely there is held the following: the microwave electric field 62(A+C)=(62A+62C).

At a time t=t0+T/4 (T indicates the period), the microwaves fed to the first microwave feeding point 61a in the first radiation portion 61 and the third microwave feeding point 62c in the second radiation portion 62 have a phase of 180 degrees, and the microwaves fed to the third microwave feeding point 61c in the first radiation portion 61 and the first microwave feeding point 62a in the second radiation portion 62 have a phase of 0 degrees. Therefore, at the time t=t0+T/4, the microwave electric fields have a magnitude of zero.

At a time t=t0+T/2, the microwaves fed to the first microwave feeding point 6 1a in the first radiation portion 61 and the third microwave feeding point 62c in the second radiation portion 62 have a phase of 270 degrees, and the microwaves fed to the third microwave feeding point 61c in the first radiation portion 61 and the first microwave feeding point 62a in the second radiation portion 62 have a phase of 90 degrees. This induces, at the time t=t0+T/2, microwave electric fields (microwave electric fields designated by arrows 61 (A+C) and 62(A+C) in Fig. 11) in the opposite directions from those of the microwave electric fields at the time t=t0, thereby synthesizing their electric powers.

At a time t=t0+3T/4, the microwaves fed to the first microwave feeding point 6 1a in the first radiation portion 61 and the third microwave feeding point 62c in the second radiation portion 62 have a phase of 360 degrees (0 degree), and the microwaves fed to the third microwave feeding point 61c in the first radiation portion 61 and the first microwave feeding point 62a in the second radiation portion 62 have a phase of 180 degrees. Therefore, similarly to at the time t=t0+T/4, the microwave electric fields have a magnitude of zero.

At a time t=t0+4T/4, similarly to at the time t=t0, the microwaves fed to the first microwave feeding points 61a and 62a and the third microwave feeding points 61c and 62c induce two microwave electric fields synthesized with each other (synthesized microwave electric fields designated by arrows 61(A+C) and 62(A+C) in Fig. 11).

When the movements of the microwave electric fields which change with time as described above are overlaid on the surfaces of the radiation portions, as illustrated at a lowermost portion in Fig. 11, the first radiation portion 61 and the second radiation portion 62 induce linearly polarized waves in a state where the two microwave electric powers fed thereto are synthesized with each other.

Further, the respective linearly polarized waves generated from the first radiation portion 61 and the second radiation portion 62 are such that the microwave electric fields therefrom are in the same direction, at the same time point.

In the microwave heating device according to the second embodiment described above, there are additionally provided the changeover portions 60a to 60f which enable control in such a way as to supply no microwave to at least one microwave feeding point, out of the microwave feeding points 61a, 61b, 61c, 62a, 62b and 62c in the respective radiation portions 61 and 62. With the microwave heating device having the aforementioned structure according to the second embodiment, by controlling the changeover portions 60a to 60f, it is possible to select radiations of circularly polarized waves or radiations of vertically polarized waves from one of the radiation portions (61 or 62), thereby enabling heating to-be-heated objects in desired states, according to the heating conditions and the heating state.

Further, the two microwave feeding points (61a, 61c or 62a, 62c) in each of the radiation portions (61 or 62) are placed such that the line connecting these microwave feeding points to each other passes through the center point (C1 or C2) of the radiation portion (61 or 62) and, also, the phase difference between the microwaves fed to the respective microwave feeding points is set to 180 degrees, at the center frequency within the used microwave frequency range. As described above, by placing the microwave feeding points at predetermined positions in the radiation portions, and by supplying, thereto, microwaves having a predetermined phase difference therebetween, it is possible to synthesize the two microwave electric powers supplied to the microwave feeding points with each other, thereby causing the respective radiation portions to radiate vertically polarized waves.

### [Heating Operations]

There will be described operations for heating a to-be-heated object with the microwave heating device having the aforementioned structure according to the second embodiment.

The microwave heating device according to the second embodiment has a structure which is largely different from that of the microwave heating device according to the aforementioned first embodiment, in that the microwave generating portion 50 is provided with changeover portions 53a to 53f for controlling the outputs.

Accordingly, with the microwave heating device according to the second embodiment, in a stage prior to the start of heating of the to-be-heated object, it is possible to select microwave feeding points in the radiation portion 61 and 62 which are to be supplied with microwaves, before the start of heating, according to heating conditions set by the user. When a selection of microwave feeding points has been made, a frequency selection operation for selecting an optimum oscillation frequency for the to-be-heated object is performed, under the heating conditions using the selected microwave feeding points, to determine an oscillation frequency for use in heating. The content of the control for this frequency selection operation conforms to the outline described in the aforementioned first embodiment and, therefore, will not be described in the second embodiment.

Further, if control for changing over among the changeover portions 53a to 53f is performed during the progress of heating, this changes the optimum oscillation frequency. Accordingly, every time the changeover portions 53a to 53f have been controlled, a frequency selection operation for selecting an optimum oscillation frequency is performed under this condition, thereby determining an optimum oscillation frequency for heating.

Next, there will be described a series of operations for processing for heating the to-be-heated object within the heating chamber 100.

At first, by opening and closing the openable door, the to-be-heated object is housed within the heating chamber 100, and the heating chamber 100 is closed and, then, the user inputs conditions for heating this to-be-heated object to an operation portion (not illustrated) and, then, pushes a heating start key. Since the heating start key has been pushed, a heating start signal is created and is inputted to a control portion 63. The control portion 63, to which the heating start signal has been inputted, outputs a control signal to the microwave generating portion 50, which causes the microwave generating portion 50 to start operating. At this time, the control portion 63 drives and controls the microwave generating portion 50, based on various types of information, such as the heating conditions Q for the to-be-heated object. Further, the control portion 63 operates a driving power supply (not illustrated) provided in the microwave heating device, for supplying electric power to the oscillation portion 51, the initial-stage amplification portions 54a to 54f, and the main amplification portions 55a to 55f.

The control portion 63 controls the changeover portions 53a to 53f and the phase variable portions 59a to 59f, based on the inputted heating conditions, for making a selection of microwave feeding points 61a, 61b, 61c, 62a, 62b, 62c in the radiation portions 61 and 62 which are to be supplied with microwaves at the time of the start of heating, and for determining the phase differences among the selected microwave feeding points.

Thereafter, as processing before the start of heating operations, a frequency selection operation for selecting an oscillation frequency for use in heating is performed. The content of the control for this frequency selection operation conforms to the outline described in the aforementioned first embodiment and, therefore, will not be described in the second embodiment.

In the microwave heating device according to the second embodiment, after determining the oscillation frequency for heating, the control portion 63 controls the oscillation portion 51 for oscillating it at the determined oscillation frequency. Thereafter, the control portion 63 operates the initial-stage amplification portions 54a to 54f and the main amplification portions 55a to 55f for causing the microwave generating portion 50 to supply microwaves at desired phases to the desired microwave feeding points and, also, for controlling the respective radiation portions 61 and 62 to radiate, to the inside of the heating chamber 100, microwaves in a desired aspect of radiations (circularly polarized waves or linearly polarized waves).

At this time, each microwave feeding point is supplied with microwave electric power having an electric power value in the range of 200 W to 300 W.

When microwaves are radiated from the radiation portions 61 and 62 in the fourth aspect of radiations (see Fig. 10) according to the second embodiment, for example, the microwaves strongly propagate in the direction in which the left and right side wall surfaces 101 and 102 are faced to each other and, at a certain time point (t=t0+T/2 in Fig. 10), the microwaves radiated from both the radiation portions 61 and 62 come into collision with each other at the center of the heating chamber 100. As a result thereof, the to-be-heated object placed substantially at the center of the heating chamber 100 is strongly heated at its substantially-center portion.

When microwaves are radiated from the radiation portions 61 and 62 in the fifth aspect of radiations (see Fig. 11) according to the second embodiment, for example, the microwaves strongly propagate in the direction in which the left and right side wall surfaces 101 and 102 are faced to each other and, at a certain time point (t=t0 in Fig. 11), the microwaves radiated from the two radiation portions 61 and 62 are aligned with the direction toward the left side wall surface 101 and, at another time point (t=t0+T/2 in Fig. 11), the microwaves radiated from the two radiation portions 61 and 62 are aligned with the direction toward the right side wall surface 102. As a result thereof, it is possible to effectively heat to-be-heated objects which are placed in left and right sides of the heating chamber 100 with an approximate center thereof sandwiched therebetween.

When detection signals from detection means for detecting the temperature of the surface of the to-be-heated object, and/or conditions of heating-time information and the like, out of the heating conditions which have been set, satisfy the pre-set conditions, and it is determined that it is necessary to make a re-selection of an aspect of radiations from the radiation portions 61 and 62 or it is necessary to make re-selections of microwave feeding points and phase differences thereamong, for this re-selection, it is possible to make a re-selection of a frequency, and it is possible to continue the heating operation for the to-be-heated object with the re-selected frequency. During the heating operation, if it is determined that a heating condition, such as the finishing temperature or the total heating time, has been satisfied, this heating operation is completed.

Further, while there has been described an example where the microwave heating device according to the second embodiment employs the two radiation portions 61 and 62, the present invention can be also applied to a microwave heating device having a structure provided with two or more radiation portions according to specifications of the microwave heating device, and the like.

Further, in the microwave heating device according to the second embodiment, the plural radiation portions can be placed on the same wall surface in the heating chamber, which can concentrate the radiation portions on the single wall surface, thereby making it easier to place a member for covering the radiation portions for protecting these radiation portions.

Further, the plural radiation portions can be placed within the heating chamber such that the directions of excitations thereof are coincident with the widthwise direction and the depthwise direction of the heating chamber, which enables defining the directions of excitations of the radiation portions in the directions toward the wall surfaces of the heating chamber for clarifying the directions of propagations of microwaves within the heating chamber, thereby enabling phase control among the respective microwave feeding points or among the radiation portions, according to the progress of preferable heating of to-be-heated objects.

Further, it is possible to vary the levels of electricity supplied to the microwave feeding points in the radiation portions according to the ratio between the widthwise size and the depthwise size of the heating chamber, which can facilitate dispersion of microwaves within the heating chamber according to the shape of the heating chamber.

For example, in cases where the heating chamber has a larger width, by supplying larger microwave electric power to the feeding points associated with the excitations in the widthwise direction, it is possible to radiate circularly polarized waves having an elliptical circling shape with a larger size in the widthwise direction of the heating chamber, thereby facilitating dispersion of radio waves within the heating chamber.

According to the second embodiment described above, by selecting microwave feeding points through control of the changeover portions and by selecting conditions of phase differences among the respective microwave feeding points through control of the phase variable portions, it is possible to facilitate heating of a certain portion of a to-be-heated object, it is possible to heat an entire to-be-heated object in a desired state or it is possible to heat plural to-be-heated objects at the same time.

Further, while, in the second embodiment, there has been exemplified a case where microwaves fed to a single microwave feeding point are cut off in each single radiation portion, it is also possible to make a selection of cutoff of microwaves fed to all the microwave feeding portions in a certain radiation portion. By making such a selection, for example, it is possible to radiate microwaves from only a single radiation portion, thereby selectively heating plural to-be-heated objects placed within the heating chamber.

Further, when the radiation portions are structured to have two or more microwave feeding portions, it is possible to make selections of microwave feeding points therefrom, as microwave feeding points to be supplied with no microwave, in each of the radiation portions, wherein the number of selected microwave feeding portions can be zero at a minimum, while it is also possible to select all the microwave feeding portions at a maximum.

As described above, in the microwave heating device according to the second embodiment, the microwaves supplied to the microwave feeding points are generated by the microwave generating portion constituted by the semiconductor devices. Accordingly, with the microwave heating device according to the second embodiment, it is possible to make the device including the plural radiation portions compact and, further, it is possible to vary the phase differences among the feeding points in the respective radiation portions and the phase differences among the radiation portions, thereby enabling various aspects of radiations from the radiation portions. Accordingly, the microwave heating device according to the second embodiment is capable of facilitating proper heating operations according to the types, the volumes and the shapes of to-be-heated objects, thereby forming a heating device with excellent convenience.

### (Third Embodiment)

Next, there will be described a microwave heating device according to a third embodiment which is not an embodiment of the invention but which is an example useful for understanding the present invention, with reference to the accompanying Fig. 12. The microwave heating device according to the third embodiment is different from the microwave heating device according to the aforementioned first embodiment, in the positions at which radiation portions are placed within the heating chamber, but is the same as the microwave heating device according to the first embodiment in terms of the other points. Accordingly, in the description of the third embodiment, components having the same functions and structures as those of the aforementioned first embodiment will be designated by the same reference characters, and descriptions thereof will be omitted by substituting the description in the first embodiment therefor.

Fig. 12 is a perspective view illustrating the inside of a heating chamber 100 in a microwave oven as a microwave heating device according to the third embodiment. In Fig. 12, the inside of the heating chamber 100 is cutout at a portion (a placement plate 25) thereof, and an openable door for opening and closing the heating chamber 100 is not illustrated.

As illustrated in Fig. 12, the microwave heating device according to the third embodiment includes radiation portions 80 and 81 which are placed at respective approximate centers of a left wall surface 101 and a right wall surface 102 faced to each other, out of the wall surfaces forming the heating chamber 100 having a substantially rectangular parallelepiped structure for housing a to-be-heated object therein.

Each of the radiation portions 80 and 81 has plural (two, in the third embodiment) microwave feeding points, and there is provided a microwave generating portion 10 having the same structure as that of the microwave generating portion 10 described with reference to Fig. 2 in the aforementioned first embodiment, wherein plural outputs of the microwave generating portion 10 are directed to the respective microwave feeding points.

The shape of the radiation portions 80 and 8 1, and the placement and the structure of the microwave feeding points in each of the radiation portions 80 and 81 are the same as those in the first embodiment.

In the microwave heating device according to the third embodiment, the two microwave feeding points in each of the radiation portions 80 and 81 are placed symmetrically with respect to a center plane in the leftward and rightward direction of the heating chamber 100.

In the microwave heating device according to the third embodiment, since the radiation portions are placed on the opposing wall surfaces of the heating chamber, it is possible to change the phase difference between the radiation portions oppositely placed to each other, thereby certainly changing the microwave distribution.

Further, in the microwave heating device according to the third embodiment, in order to protect the radiation portions 80 and 81, there are provided covers 82 and 83 made of a low dielectric loss material for these respective radiation portions.

Further, in the microwave heating device according to the third embodiment, a single radiation portion 80 or 81 can be provided with three or more microwave feeding points. Further, the respective radiation portions can be provided with different numbers of microwave feeding points.

### (Fourth Embodiment)

Next, there will be described a microwave heating device according to a fourth embodiment, with reference to the accompanying Figs. 13 and 14. The fourth embodiment is an embodiment of the present invention.

The microwave heating device according to the fourth embodiment is different from the microwave heating device according to the aforementioned first embodiment, in that radiation portions have four microwave feeding points, but is the same as the microwave heating device according to the first embodiment in terms of the other points. Accordingly, in the description of the fourth embodiment, components having the same functions and structures as those of the aforementioned first embodiment will be designated by the same reference characters, and descriptions thereof will be omitted by substituting the description in the first embodiment therefor.

Fig. 13 is a plan view illustrating the radiation portions placed on the bottom wall surface in the microwave heating device according to the fourth embodiment. In the microwave heating device according to the fourth embodiment, each single microwave radiation portion is provided with four microwave feeding points.

In the microwave heating device according to the fourth embodiment, the two radiation portions (a first radiation portion 90 and a second radiation portion 91) are placed at positions symmetrical with respect to a center line in the forward and rearward direction of the device (a line designated by a reference character Y in Fig. 13), which passes through an approximate-center point (CO) of the bottom wall surface 103.

The first radiation portion 90 has four microwave feeding portions 90a, 90b, 90c and 90d, wherein respective outputs of the microwave generating portion are directed to the microwave feeding points 90a, 90b, 90c and 90d. Similarly, the second radiation portion 91 has four microwave feeding portions 91a, 91b, 9 1 c and 91d, wherein the respective outputs of the microwave generating portion are directed to the microwave feeding points 91a, 91b, 91c and 91d.

In the microwave heating device according to the fourth embodiment, the microwave generating portion basically has the same structure as that of the microwave generating portion 10 according to the first embodiment, wherein an electric-power dividing portion forms eight microwave amplification paths, and there are provided eight output portions for supplying microwave electric power to the eight microwave feeding points.

As illustrated in Fig. 13, the first radiation portion 90 is provided with the four microwave feeding points 90a, 90b, 90c and 90d which are placed at equal distances from the center C1 and with an angular pitch of 90 degrees. Similarly, the second radiation portion 91 is provided with the four microwave feeding points 91a, 91b, 91c and 91d which are placed at equal distances from the center C2 and with an angular pitch of 90 degrees.

The feeding phases for the first microwave feeding point 90a and the third microwave feeding point 90c are made to be equal to each other, wherein the first microwave feeding point 90a and the third microwave feeding point 90c are placed on the center line in the leftward and rightward direction of the device (the line designated by a reference character X in Fig. 13), which passes through the center C1 of the first radiation portion 90. Further, the feeding phases for the second microwave feeding point 90b and the fourth microwave feeding point 90d, which are placed orthogonally to the first microwave feeding point 90a and the third microwave feeding point 90c, are set, such that the second microwave feeding point 90b and the fourth microwave feeding point 90d are fed with electricity at a phase delayed by 90 degrees from the feeding phase for the first microwave feeding point 90a and the third microwave feeding point 90c.

Here, the phase delay of 90 degrees is expressed as a characteristic value at the center frequency (for example, 2450 MHz) in the frequency range used in the microwave heating device.

As described above, in the microwave heating device according to the fourth embodiment, the microwave feeding points 90a, 90b, 90c, 90d, 91a, 91b, 91c and 91d are placed in the respective radiation portions 90 and 91, and the microwaves supplied to the respective microwave feeding points 90a, 90b, 90c, 90d, 91a, 91b, 91c and 91d are controlled in terms of their phases, which enables synthesizing the two microwave electric powers supplied through the first microwave feeding points 90a, 91a and the third microwave feeding points 90c, 91c, and the second microwave feeding points 90b, 91b and the fourth microwave feeding points 90d, 91d, which are placed on straight lines in the respective radiation portions 90 and 91 with the centers C1 and C2 sandwiched therebetween.

Further, in the microwave heating device according to the fourth embodiment, by employing a sixth aspect of radiations where the microwaves supplied to the second microwave feeding points 90b and 91b and the fourth microwave feeding points 90d and 91d are delayed in phase by 90 degrees from those for the first microwave feeding points 90a and 91a and the third microwave feeding points 90c and 91c, as will be described later, the respective radiation portions 90 and 91 are adapted to radiate microwaves forming circularly polarized waves having larger microwave electric power resulted from the synthesis of the two microwave electric powers.

### [Description of Sixth Aspect of Radiations]

With reference to Fig. 14, there will be described the mechanism for synthesizing electric power and for generating such circularly polarized waves in the sixth aspect of radiations. Fig. 14 is a view illustrating the sixth aspect of radiations from the radiation portions 90 and 91 in the microwave heating device according to the fourth embodiment.

Assuming that, at a time t= t0, the phase (the absolute phase) of electricity fed to the microwave feeding points 90a, 90c and 91a and 91c is 90 degrees, the phase (the absolute phase) of the microwave signals supplied to the microwave feeding points 90b, 90d and 91b and 91d is delayed by 90 degrees from the feeding phase for the microwave feeding points 90a, 90c and 9 1a, 91c and, therefore, is 0 degree.

Accordingly, at the time t=t0, the microwaves from the microwave feeding points 90a, 90c and 91a, 91c induce microwave electric fields in directions opposite from each other (microwave electric fields designated by thick arrows 90(A+C) and 91(A+C) in Fig. 14).

Further, in Fig. 14, the arrow 90(A+C) designating the microwave electric field indicates the value of the sum of the microwave electric field from the microwave feeding point 90a, which is designated by an arrow 90A, and the microwave electric field from the microwave feeding point 90c, which is designated by an arrow 90C. Further, in Fig. 14, arrows 91(A+C), 90(B+D) and 91(B+D) indicating other microwave electric fields indicate the values of the sums of the respective microwave electric fields, similarly to the aforementioned arrow 90(A+C).

At a time t=t0+T/4 (T indicates the period), the microwave signals supplied to the microwave feeding points 90a, 90c and 91a, 91c have a phase of 180 degrees, while the microwave signals supplied to the microwave feeding points 90b, 90d and 91b, 91d have a phase of 90 degrees. This induces, at the time t=t0+T/4, microwave electric fields (microwave electric fields designated by thick arrows 90(B+D) and 91(B+D) in Fig. 14).

At a time t=t0+T/2, the microwave signals supplied to the microwave feeding points 90a, 90c and 91a, 91c have a phase of 270 degrees, while the microwave signals supplied to the microwave feeding points 90b, 90d and 91b, 91d have a phase of 180 degrees. This induces, at the time t=t0+T/2, microwave electric fields (microwave electric fields designated by thick arrows 90(A+C) and 91(A+C) in Fig. 14) in the opposite directions from those of the microwave electric fields at the time t=t0.

At a time t=tO+3T/4, the microwave signals supplied to the microwave feeding points 90a, 90c and 91a, 91c have a phase of 360 degrees (0 degree), while the microwave signals supplied to the microwave feeding points 90b, 90d and 91b, 91d have a phase of 270 degrees. This induces, at the time t=t0+3T/4, microwave electric fields (microwave electric fields designated by thick arrows 90(B+C) and 91(B+D) in Fig. 14) in the opposite directions from those of the microwave electric fields represented at the time t=t0+T/4.

At a time t=t0+4T/4, similarly to at the time t=t0, microwave electric fields designated by thick arrows 90(A+C) and 91(A+C) in Fig. 14 are induced.

When the movements of the microwave electric fields which change with time as described above are overlaid on the surfaces of the radiation portions, as illustrated at a lowermost portion in Fig. 14, the first radiation portion 90 generates right-hand circularly polarized waves, while the second radiation portion 91 generates left-hand circularly polarized waves.

Regarding the magnitude of the electric field vector of the circularly polarized waves (scalar quantity), since the two microwave feeding points are synthesized, the circularly polarized waves generated therefrom have a magnitude which is about twice that in the first aspect of radiations according to the aforementioned first embodiment illustrated in Fig. 4.

As described in the aforementioned respective embodiments, each single radiation portion is provided with plural microwave feeding points, and the phase differences among the microwave feeding points can be controlled, which enables the radiation portions to form radiation distributions having circular shapes or elliptical shapes having radii with various sizes. With the microwave heating device according to the present invention, it is possible to utilize such various aspects of radiations for variably controlling the microwave distribution within the heating chamber in various aspects, which enables easily and certainly realizing uniform heating of a to-be-heated object housed in the heating chamber or concentrated heating for partially and concentratively heating the to-be-heated object, thereby enabling heating the to-be-heated object in a desired state.

With the microwave heating device according to the present invention, it is possible to enable the radiation portions to have aspects of radiations for forming both linearly polarized waves and circularly polarized waves, and, further, it is possible to enable the radiation portions to have an electric-power synthesizing function, which enables certainly heating to-be-heated objects with various shapes, types and volumes in desired states.

### Industrial Applicability

The microwave heating device according to the present invention can be also applied to heating devices which utilize induction heating as represented by microwave ovens, garbage disposers, microwave generators in plasma generators as semiconductor fabrication apparatuses or other applications.

### Reference Signs List

- 10: Microwave generating portion
- 11: Oscillation portion
- 12: Electric-power dividing portion
- 13a to 13d, 17a to 17d: Microwave transmission path
- 14a to 14d: Initial-stage amplification portion
- 15a to 15d: Main amplification portion
- 16a to 16d: Output portion
- 18a to 18d: Electric-power detection portion
- 19a to 19d: Phase variable portion
- 20, 21: Radiation portion
- 20a, 20b, 21a, 21b: Microwave feeding point
- 22: Control portion
- 100: Heating chamber
- 101: Left wall surface
- 102: Right wall surface
- 103: Bottom wall surface
- 104: Upper wall surface
- 105: Back wall surface

## Claims

1. A microwave heating device comprising:
a heating chamber (100) for housing a to-be-heated object, and plural radiation portions (20, 21) for radiating microwaves within the heating chamber (100);
wherein each of the plural radiation portions (20, 21) includes a first microwave feeding point (20a, 21a) and a second microwave feeding point (20b, 21b);
the plural radiation portions (20, 21) are placed on the same wall surface of the heating chamber (100),
the first microwave feeding point (20a or 21a) and the second microwave feeding point (20b or 21b) in each of the plural radiation portions (20, 21) are adapted such that lines connecting the respective microwave feeding points (20a, 20b, 21a or 21b) to a center point (C1 or C2) of this radiation portion (20 or 21) form an intersection angle of 90 degrees, and
the microwaves radiated from the respective radiation portions (20, 21) are radiated within the heating chamber (100) such that the electric powers of the microwaves are synthesized;
**characterized in that**
the first microwave feeding points (20a, 21a) of the plural radiation portions (20, 21) are placed on a line connecting the center points (C1, C2) of the plural radiation portions (20,21).

2. The microwave heating device according to claim 1, wherein microwaves radiated from the at least two radiation portions (20, 21) are variable in phase difference therebetween.

3. The microwave heating device according to claim 1 or 2, wherein microwaves fed to the respective microwave feeding points (20a, 20b; 21a, 21b) are made to have a phase difference of 90 degrees, therebetween, at a center frequency within a used microwave frequency range.

4. The microwave heating device according to claim 1 or 2, wherein at a center frequency within a used microwave frequency range, with respect to the phase of microwaves fed to one of the microwave feeding points (20a, 20b; 21a and 21b), which is defined as a reference, the phase of microwaves fed to the other microwave feeding point (20a, 20b, 21a or 21b) is changed over between 90 degrees and -90 degrees.

5. The microwave heating device according to claim 1 or 2, wherein there is provided a changeover portion adapted to be controlled for stopping feeding of microwaves to at least one microwave feeding point, out of the first microwave feeding point (20a or 21a) and the second microwave feeding point (20b or 21b) in each of the radiation portions (20, 21).

6. The microwave heating device according to any one of claims 1 to 5, wherein the plural radiation portions (20, 21) are placed in the heating chamber (100), such that directions of excitations of the respective radiation portions (20, 21) are coincident with a widthwise direction and a depthwise direction of the heating chamber (100), and microwaves fed to the respective plural microwave feeding points (20a, 20b; 21a or 21b) in each of the radiation portions (20, 21) are varied, in level, according to the ratio between a widthwise size and a depthwise size of the heating chamber (100).

## Patentansprüche

1. Mikrowellenheizvorrichtung umfassend:
eine Heizkammer (100) zum Aufnehmen eines zu erhitzenden Objekts und mehrere Strahlungsabschnitte (20, 21) zum Abstrahlen von Mikrowellen innerhalb der Heizkammer (100);
wobei jeder der mehreren Strahlungsabschnitte (20, 21) einen ersten Mikrowellenspeisepunkt (20a, 21a) und einen zweiten Mikrowellenspeisepunkt (20b, 21b) beinhaltet;
die mehreren Strahlungsabschnitte (20, 21) auf der gleichen Wandfläche der Heizkammer (100) platziert sind,
der erste Mikrowellenspeisepunkt (20a oder 21a) und der zweite Mikrowellenspeisepunkt (20b oder 21b) in jedem der mehreren Strahlungsabschnitte (20, 21) so angepasst sind, dass Leitungen, die die jeweiligen Mikrowellenspeisepunkte (20a, 20b, 21a oder 21b) mit einem Mittelpunkt (C1 oder C2) dieses Strahlungsabschnitts (20 oder 21) verbinden, einen Schnittwinkel von 90 Grad bilden, und
die von den jeweiligen Strahlungsabschnitten (20, 21) abgestrahlten Mikrowellen innerhalb der Heizkammer (100) so abgestrahlt werden, dass die elektrischen Leistungen der Mikrowellen synthetisiert werden;
**dadurch gekennzeichnet, dass**
die ersten Mikrowellenspeisepunkte (20a, 21a) der mehreren Strahlungsabschnitte (20, 21) auf einer Linie platziert sind, die die Mittelpunkte (C1, C2) der mehreren Strahlungsabschnitte (20, 21) verbindet.

2. Mikrowellenheizvorrichtung nach Anspruch 1, wobei Mikrowellen, die von den mindestens zwei Strahlungsabschnitten (20, 21) abgestrahlt werden, in Phasendifferenz dazwischen variabel sind.

3. Mikrowellenheizvorrichtung nach Anspruch 1 oder 2, wobei Mikrowellen, die zu den jeweiligen Mikrowellenspeisepunkten (20a, 20b; 21a, 21b) gespeist werden, eine Phasendifferenz von 90 Grad dazwischen bei einer Mittenfrequenz innerhalb eines verwendeten Mikrowellenfrequenzbereichs aufweisen.

4. Mikrowellenheizvorrichtung nach Anspruch 1 oder 2, wobei, bei einer Mittenfrequenz innerhalb eines verwendeten Mikrowellenfrequenzbereichs bezüglich der Phase von Mikrowellen, die zu einer der Mikrowellenspeisepunkten (20a, 20b; 21a und 21b) gespeist wird, welche als Referenz definiert ist, die Phase der Mikrowellen, die zu dem anderen Mikrowellenspeisepunkt (20a, 20b, 21a oder 21b) gespeist werden, zwischen 90 Grad und -90 Grad umgeschaltet wird.

5. Mikrowellenheizvorrichtung nach Anspruch 1 oder 2, wobei ein Umschaltabschnitt bereitgestellt wird, der angepasst ist, um gesteuert zu werden, um Speisung von Mikrowellen zu mindestens einem Mikrowellenspeisepunkt von dem ersten Mikrowellenspeisepunkt (20a oder 21a) und dem zweiten Mikrowellenspeisepunkt (20b oder 21b) in jedem der Strahlungsabschnitte (20, 21) zu stoppen.

6. Mikrowellenheizvorrichtung nach einem der Ansprüche 1 bis 5, wobei die mehreren Strahlungsabschnitte (20, 21) in der Heizkammer (100) so platziert werden, dass Anregungsrichtungen der jeweiligen Strahlungsabschnitte (20, 21) mit einer Breitenrichtung und einer Tiefenrichtung der Heizkammer (100) übereinstimmen, und Mikrowellen, die zu den jeweiligen mehreren Mikrowellenspeisepunkten (20a, 20b; 21a oder 21b) in jedem der Strahlungsabschnitte (20, 21) gespeist werden, in Höhe variiert werden, gemäß dem Verhältnis zwischen einer Breitengröße und einer Tiefengröße der Heizkammer (100).

## Revendications

1. Dispositif de chauffage à micro-ondes comprenant :
une chambre de chauffage (100) pour loger un objet à chauffer, et plusieurs parties de rayonnement (20, 21) pour rayonner des micro-ondes à l'intérieur de la chambre de chauffage (100) ;
dans lequel chacune des multiples parties de rayonnement (20, 21) comprend un premier point d'alimentation micro-ondes (20a, 21a) et un deuxième point d'alimentation micro-ondes (20b, 21b) ;
les multiples parties de rayonnement (20, 21) sont placées sur la même surface de paroi de la chambre de chauffage (100),
le premier point d'alimentation micro-ondes (20a ou 21a) et le deuxième point d'alimentation micro-ondes (20b ou 21b) dans chacune des multiples parties de rayonnement (20, 21) sont adaptés de sorte que des lignes reliant les points d'alimentation micro-ondes respectifs (20a, 20b, 21a ou 21b) à un point central (C1 ou C2) de cette partie de rayonnement (20 ou 21) forment une intersection sur un angle de 90 degrés, et
les micro-ondes rayonnées à partir des parties de rayonnement respectives (20, 21) sont rayonnées à l'intérieur de la chambre de chauffage (100) de telle sorte que les puissances électriques des micro-ondes sont synthétisées ;
**caractérisé en ce que**
les premiers points d'alimentation micro-ondes (20a, 21a) des multiples parties de rayonnement (20, 21) sont placés sur une ligne reliant les points centraux (C1, C2) des multiples parties de rayonnement (20, 21).

2. Dispositif de chauffage à micro-ondes selon la revendication 1, dans lequel les micro-ondes rayonnées à partir des au moins deux parties de rayonnement (20, 21) ont une différence de phase variable entre elles.

3. Dispositif de chauffage à micro-ondes selon la revendication 1 ou 2, dans lequel les micro-ondes alimentées aux points d'alimentation micro-ondes respectifs (20a, 20b; 21a, 21b) sont conçues pour avoir une différence de phase de 90 degrés, entre elles, à une fréquence centrale dans une gamme de fréquences micro-ondes utilisée.

4. Dispositif de chauffage à micro-ondes selon la revendication 1 ou 2, dans lequel à une fréquence centrale dans une plage de fréquence micro-ondes utilisée, par rapport à la phase des micro-ondes alimentées à l'un des points d'alimentation micro-ondes (20a, 20b; 21a et 21b), qui est définie comme une référence, la phase des micro-ondes alimentant l'autre point d'alimentation micro-ondes (20a, 20b, 21a ou 21b) est modifiée entre 90 degrés et -90 degrés.

5. Dispositif de chauffage à micro-ondes selon la revendication 1 ou 2, dans lequel il est prévu une partie de commutation adaptée pour être commandée pour arrêter l'alimentation de micro-ondes à au moins un point d'alimentation micro-ondes, hors du premier point d'alimentation micro-ondes (20a ou 21a) et le deuxième point d'alimentation micro-ondes (20b ou 21b) dans chacune des parties de rayonnement (20, 21).

6. Dispositif de chauffage à micro-ondes selon l'une quelconque des revendications 1 à 5, dans lequel les multiples parties de rayonnement (20, 21) sont placées dans la chambre de chauffage (100), de telle sorte que les directions d'excitation des parties de rayonnement respectives (20, 21) coïncident avec une direction dans le sens de la largeur et dans le sens de la profondeur de la chambre de chauffage (100), et les micro-ondes alimentant les multiples points d'alimentation micro-ondes respectifs (20a, 20b; 21a ou 21b) dans chacune des parties de rayonnement (20, 21) sont variées, en niveau, en fonction du rapport entre une dimension en largeur et une dimension en profondeur de la chambre de chauffage (100).
